# EUROPÄISCHE PATENTSCHRIFT

(11) **EP 4 116 586 B1**
(45) Veröffentlichungstag und Bekanntmachung des Hinweises auf die Patenterteilung: **18.12.2024**
(21) Anmeldenummer: 22182862.7
(22) Anmeldetag: 04.07.2022
(51) Int. Cl.: F04B 41/06, F04B 49/03, F04B 49/06, F04B 49/20, F25B 31/02, F25B 49/02

(54) **KÄLTEMITTELVERDICHTERVERBUND**
REFRIGERANT COMPRESSOR ASSEMBLY
ENSEMBLE COMPRESSEUR DE FLUIDE FRIGORIGÈNE

(30) Priorität: 08.07.2021 DE 102021117724
(43) Veröffentlichungstag der Anmeldung: 11.01.2023
(73) Patentinhaber: BITZER Kühlmaschinenbau GmbH, 71065 Sindelfingen (DE)
(72) Erfinder: Javerschek, Oliver, 72072 Tübingen (DE); Mannewitz, Jens, 04435 Schkeuditz (DE); Fuhrer, Tobias, 72108 Rottenburg (DE)
(74) Vertreter: Hoeger, Stellrecht & Partner Patentanwälte mbB

(56) Entgegenhaltungen:
- EP-A1- 1 710 435
- WO-A1-2019/180003
- WO-A1-2021/124087
- CN-A- 110 307 144
- DE-A1- 102014 004 619
- IT-A1- 201600 114 834
- US-A1- 2013 139 535

## Beschreibung

Die Erfindung betrifft einen Kältemittelverdichterverbund für eine Kältemittelanlage, umfassend mindestens zwei parallel zwischen einem gemeinsamen Niederdruckanschluss und einem gemeinsamen Hochdruckanschluss arbeitende, einzeln betreibbare sowie jeweils einen Elektromotor und von diesem angetriebene Zylindereinheiten aufweisende Kolbenverdichter.

Der Erfindung liegt die Aufgabe zugrunde, einen derartigen Kältemittelverdichterverbund bei unterschiedlichen Anforderungen zu betreiben.

Diese Aufgabe wird bei einem Kältemittelverdichterverbund der vorstehend beschriebenen Art erfindungsgemäß dadurch gelöst, dass bei dem Kältemittelverdichterverbund ein im Bereich von einem Minimalmassenstromdurchsatz bis zu einem Maximalmassenstromdurchsatz variabler Gesamtmassenstromdurchsatz des Kältemittelverdichterverbunds dadurch einstellbar ist, dass bei mindestens einem der Kolbenverdichter dessen Massenstromdurchsatz durch Drehzahlauswahl mittels eines Frequenzumrichters für den Elektromotor einstellbar ist und dass bei mindestens einem der Kolbenverdichter dessen Massenstromdurchsatz durch Zylinderauswahl einstellbar ist und dass eine Betriebszustandssteuerung für den Kältemittelverdichterverbund vorgesehen ist, welche basierend auf einem dieser übermittelten Leistungsanforderungssignal der Kälteanlage durch Vorgabe der Zylinderauswahl und der Drehzahlauswahl den Gesamtmassenstromdurchsatz steuert oder regelt.

Der Vorteil der erfindungsgemäßen Lösung ist darin zu sehen, dass aufgrund des Einsatzes von mindestens zwei Kolbenverdichtern beim Kältemittelverdichterverbund durch die Drehzahlauswahl und die Zylinderauswahl bei diesen Kolbenverdichtern eine große Variabilität im Hinblick auf das Bereitstellen eines geforderten Gesamtmassenstromdurchsatzes bei gleichzeitig durch den Einsatz von mindestens zwei Kolbenverdichtern hohem Maximalmassenstromdurchsatz möglich ist.

Die Variabilität des Gesamtmassenstromdurchsatzes lässt sich dann optimal gestalten, wenn die Betriebszustandssteuerung zum Erreichen mindestens eines Gesamtmassenstromdurchsatzes des Kältemittelverdichterverbunds bei mindestens einem Kolbenverdichter mindestens eine zeitlich konstante, d.h. zeitlich unmodulierte, Zylinderauswahl vorgibt.

Unter einer zeitlich unmodulierten Zylinderauswahl ist zu verstehen, dass bei dem jeweiligen Kolbenverdichter während des Zeitraums, während welchem ein bestimmter Gesamtmassenstromdurchsatz des Kältemittelverdichterverbunds erzielt werden soll, eine bestimmte Anzahl von Zylindern des jeweiligen Kolbenverdichters aktiviert ist und die übrigen deaktiviert sind.

Das reicht von Aktivierung aller Zylinder bis zur Deaktivierung aller Zylinder, was auch durch Abschalten des jeweiligen Kolbenverdichters erreichbar ist.

Ergänzend oder alternativ dazu lässt sich die Variabilität noch weiter verbessern, wenn die Betriebszustandssteuerung zum Erreichen des jeweiligen Gesamtmassenstromdurchsatzes des Kältemittelverdichterverbunds mindestens eine zeitlich modulierte, d.h. zeitlich variierende, insbesondere pulsweitenmodulierte oder gemäß der WO 2017/129224 A1 modulierte, Zylinderauswahl vorgibt.

Unter einer zeitlich modulierten Zylinderauswahl ist zu verstehen, dass bei dem jeweiligen Kolbenverdichter während des Zeitraums, während welchem ein bestimmter Gesamtmassenstromdurchsatz des Kältemittelverdichterverbunds erzielt werden soll, eine bestimmte Anzahl von Zylindern des jeweiligen Kolbenverdichters zeitlich variierend aktiviert und deaktiviert wird, um den von diesen verdichteten Massenstrom bezogen auf den Massenstrom bei deren dauerhafter Aktivierung zu reduzieren.

Dies kann eine zeitlich variierende Aktivierung und Deaktivierung aller Zylinder des jeweiligen Kolbenverdichters oder nur einer Teilmenge aller Zylinder sein.

Eine derartige zeitlich modulierte Zylinderauswahl schafft die Möglichkeit, bei diesem Kolbenverdichter dessen Massenstromdurchsatz sehr stark zu variieren und zu reduzieren und damit auch den Gesamtmassenstromdurchsatz des Kältemittelverdichterverbunds auf möglichst niedrige Werte zu reduzieren, insbesondere dann, wenn der nicht zeitlich modulierte Kolbenverdichter abgeschaltet wird.

Darüber hinaus ist vorzugsweise vorgesehen, dass die Betriebszustandssteuerung zum Erreichen des jeweiligen Gesamtmassenstromdurchsatzes des Kältemittelverdichterverbunds eine Drehzahlauswahl vorgibt.

Grundsätzlich kann bei jedem der Kolbenverdichter des Kältemittelverdichterverbunds die Möglichkeit einer Drehzahlauswahl vorgesehen sein und somit auch von der Betriebszustandssteuerung vorgegeben werden.

Eine besonders zweckmäßige Lösung sieht jedoch vor, dass eine Drehzahlauswahl nur bei einem Kolbenverdichter des Kältemittelverdichterverbunds vorgebbar ist.

Eine einfache Lösung sieht vor, dass die Betriebszustandssteuerung zum Erreichen des jeweiligen Gesamtmassenstromdurchsatzes einen ersten der Kolbenverdichter mit Drehzahlauswahl und einen zweiten der Kolbenverdichter mit Zylinderauswahl betreibt.

Dabei kann die Betriebszustandssteuerung grundsätzlich den zweiten Kolbenverdichter lediglich mit zeitlich konstanter Drehzahlauswahl betreiben.

Noch vorteilhafter ist es, insbesondere um eine möglichst große Variabilität im Hinblick auf einen niedrigen Gesamtmassenstromdurchsatz zu erreichen, wenn die Betriebszustandssteuerung zum Erreichen des jeweiligen Gesamtmassenstromdurchsatzes den zweiten Kolbenverdichter mit zeitlich modulierter und/oder zeitlich unmodulierter Zylinderauswahl betreibt.

In diesem Fall werden insbesondere ausgewählte Zylinder zeitlich moduliert betrieben und die anderen Zylinder zeitlich unmoduliert, d.h. zugeschaltet oder abgeschaltet, betrieben.

Damit besteht insbesondere in Kombination mit dem ersten, mit Drehzahlauswahl betriebenen Kolbenverdichter eine vergrößerte Variabilität, um den Betrieb bei dem jeweiligen Gesamtmassenstromdurchsatz optimieren zu können.

Eine andere vorteilhafte Lösung sieht vor, dass die Betriebszustandssteuerung zum Erreichen des jeweiligen Gesamtmassenstromdurchsatzes einen ersten der Kolbenverdichter mit Drehzahlauswahl und Zylinderauswahl und einen zweiten der Kolbenverdichter mit Zylinderauswahl betreibt.

Prinzipiell wäre es in diesem Fall möglich, beide Kolbenverdichter mit zeitlich unmodulierter Zylinderauswahl und/oder zeitlich modulierter Zylinderauswahl zu betreiben.

Um die Betriebsweise jedoch möglichst einfach zu strukturieren sieht eine vorteilhafte Lösung vor, dass die Betriebszustandssteuerung zum Erreichen des jeweiligen Gesamtmassenstromdurchsatzes den ersten Kolbenverdichter und den zweiten Kolbenverdichter mit zeitlich unmodulierter Zylinderauswahl und einen der Kolbenverdichter auch mit zeitlich modulierter Zylinderauswahl betreibt.

Um insbesondere bei niedrigem Gesamtmassenstromdurchsatz einen flexiblen Betrieb zu ermöglichen, ist vorgesehen, dass der Betrieb von mindestens einem der Kolbenverdichter mit Drehzahlauswahl sowohl den Betrieb bei Drehzahl null als auch den Betrieb bei einem für den erforderlichen Massenstromdurchsatz geeigneten Drehzahlbereich umfasst, das heißt, dass der mit Drehzahlauswahl zu betreibende Kolbenverdichter auch abgeschaltet werden kann.

Darüber hinaus ist es im Zusammenhang mit der möglichst optimalen Variabilität von Vorteil, wenn der Betrieb von mindestens einem der Kolbenverdichter durch Zylinderauswahl einen Betrieb mit allen Zylindereinheiten, oder einer Teilmenge aller Zylindereinheiten oder einen Betrieb bei abgeschalteten Zylindereinheiten oder abgeschaltetem Elektromotor umfasst.

Hinsichtlich des Betriebs des Kältemittelverdichterverbunds mittels der Betriebszustandssteuerung sind die unterschiedlichsten Möglichkeiten denkbar.

So sieht eine vorteilhafte Lösung vor, dass die Betriebszustandssteuerung bei einem Gesamtmassenstromdurchsatz nahe dem Minimalmassenstromdurchsatz nur einen der Kolbenverdichter betreibt.

Beispielsweise erfolgt dies dadurch, dass die Betriebszustandssteuerung bei dem niedrigsten möglichen Gesamtmassenstromdurchsatz nur den mit zeitlich modulierter Zylinderauswahl betreibbaren Kältemittelverdichter betreibt.

Ergänzend oder alternativ ist in diesem Fall vorzugsweise vorgesehen, dass die Betriebszustandssteuerung bei einem Gesamtmassenstromdurchsatz nahe dem niedrigsten möglichen Gesamtmassenstromdurchsatz, insbesondere bei dem sich an den niedrigsten möglichen Gesamtmassenstromdurchsatz anschließenden Gesamtmassenstromdurchsatz, nur den mit Drehzahlauswahl betreibbaren Kältemittelverdichter betreibt.

Eine andere vorteilhafte Lösung sieht vor, dass die Betriebszustandssteuerung bei dem niedrigsten Gesamtmassenstromdurchsatz nur den Kolbenverdichter mit Drehzahlauswahl und Zylinderauswahl betreibt, wobei die Zylinderauswahl dabei beispielsweise eine zeitlich unmodulierte Zylinderauswahl oder beispielsweise ergänzend dazu noch kombiniert mit zeitlich modulierter Zylinderauswahl sein kann.

Darüber hinaus eröffnet die Betriebszustandssteuerung noch die Möglichkeit, die Drehzahlauswahl und die Zylinderauswahl im Hinblick auf den höchsten Gütegrad oder COP und/oder die niedrigste elektrischen Leistungsaufnahme bei dem jeweiligen Gesamtmassenstromdurchsatz, zu optimieren.

Eine weitere zweckmäßige Lösung sieht vor, dass die Betriebszustandssteuerung bei mehreren, durch Drehzahlauswahl und Zylinderauswahl möglichen Betriebsmodi zum Erreichen des jeweiligen Gesamtmassenstromdurchsatzes den Gütegrad oder COP oder die elektrische Leistungsaufnahme zu den möglichen Betriebsmodi ermittelt und den Betriebsmodus mit dem höchsten Gütegrad oder COP oder der niedrigsten elektrischen Leistungsaufnahme auswählt.

Dabei kann die Ermittlung des Gütegrads oder der elektrischen Leistungsaufnahme in unterschiedlichster Art und Weise erfolgen.

Eine Möglichkeit sieht vor, dass die Betriebszustandssteuerung die für die Ermittlung des Gütegrads oder des COP oder der elektrischen Leistungsaufnahme für die jeweilige Drehzahlauswahl und/oder Zylinderauswahl erforderlichen Daten abgespeichert hat.

Diese Daten können beispielsweise im Rahmen eines Eichbetriebs des Kältemittelverdichterverbundes ermittelt werden.

Eine andere Möglichkeit besteht darin, dass die Betriebszustandssteuerung für die Ermittlung des Gütegrads oder des COP oder der elektrischen Leistungsaufnahme für die jeweilige Drehzahlauswahl und/oder Zylinderauswahl die Daten im Rahmen eines Erstbetriebs und/oder im Rahmen des laufenden Betriebs des Kältemittelverdichterverbunds ermittelt und abspeichert.

Eine andere vorteilhafte Möglichkeit sieht vor, dass die Betriebszustandssteuerung für die Ermittlung des Gütegrads oder des COP oder der elektrischen Leistungsaufnahme für die jeweilige Drehzahlauswahl oder Zylinderauswahl diese Werte im jeweils laufenden Betrieb des Kältemittelverdichterverbunds ermittelt.

Hinsichtlich der Art und Weise, wie die optimalen Bedingungen ermittelt werden, sieht eine vorteilhafte Lösung vor, dass die Ermittlung des Gütegrads oder COP oder der elektrischen Leistungsaufnahme durch die Betriebszustandssteuerung durch Erfassung des Niederdrucks und/oder des Hochdrucks des Kältemittelverdichterverbunds erfolgt.

Eine weitere vorteilhafte Lösung sieht vor, dass die Betriebszustandssteuerung zur Ermittlung des Gütegrads oder des COP oder der elektrischen Leistungsaufnahme das Kältemittel, den Gesamtmassenstromdurchsatz, die elektrische Leistungsaufnahme und/oder die Drehzahl der Elektromotoren heranzieht.

Eine weitere Lösung sieht vor, dass die Betriebszustandssteuerung zur Optimierung des Gütegrads oder COP oder der elektrischen Leistungsaufnahme der möglichen Betriebsmodi, umfassend Drehzahlauswahl und Zylinderauswahl, sämtliche, durch den Kältemittelverdichterverbund realisierbaren Gesamtmassenstromdurchsätze unterschiedlichen Gesamtmassenstromdurchsatzbereichen zuordnet und jedem Gesamtmassenstromdurchsatzbereich bestimmte Betriebsmodi, umfassend Drehzahlauswahl und Zylinderauswahl, zuordnet.

Im Zusammenhang mit der bisherigen Erläuterung der erfindungsgemäßen Lösung wurde nicht näher darauf eingegangen, wie die Aktivierung und Deaktivierung jeder Zylinderbank erfolgen soll.

So sieht eine vorteilhafte Lösung vor, dass die Aktivierung und Deaktivierung jeder Zylinderbank mittels einer von der Betriebszustandssteuerung gesteuerten mechanischen Leistungssteuereinheit erfolgt.

Das heißt, dass insbesondere die Betriebszustandssteuerung die mechanische Leistungssteuereinheit jeder der Zylinderbänke ansteuert, die mit einer derartigen mechanischen Leistungssteuereinheit versehen ist.

Dabei kann die mechanische Leistungssteuereinheit in dem Kältemittelverdichter grundsätzlich an beliebiger Stelle angeordnet sein.

Besonders günstig ist es, wenn die mechanische Leistungssteuereinheit einem Zylinderkopf der jeweiligen Zylinderbank zugeordnet ist.

Darüber hinaus ist vorteilhafterweise vorgesehen, dass die mechanische Leistungssteuereinheit zum Aktivieren oder Deaktivieren der jeweiligen Zylinderbank einen Einlassstrom in die Einlasskammer des Zylinderkopfes steuert.

Das heißt, dass insbesondere die Leistungssteuereinheit den Einlassstrom in die Einlasskammer unterbricht und damit die jeweilige Zylinderbank deaktiviert oder umgekehrt.

Eine andere vorteilhafte Lösung sieht vor, dass die Leistungssteuereinheit zum Aktivieren oder Deaktivieren der jeweiligen Zylinderbank in dem Zylinderkopf die Auslasskammer mit der Einlasskammer verbindet.

Das heißt, dass insbesondere die Leistungssteuereinheit in diesem Fall die Auslasskammer und die Einlasskammer kurzschließt, so dass der Antrieb der Zylinderbank ohne Drehmomentschwankungen möglich ist, eine Lösung die sich insbesondere für COz als Kältemittel eignet.

Hinsichtlich der Betriebszustandssteuerung ist beispielsweise vorgesehen, dass diese eine vom Frequenzumrichter separate Steuerung sein kann.

Das heißt, dass beispielsweise bei Integration des Frequenzumrichters in den Kältemittelverdichter die Betriebszustandssteuerung separat, beispielsweise am Kältemittelverdichter oder unabhängig von diesem, angeordnet ist.

Alternativ dazu ist es aber auch möglich, dass die Betriebszustandssteuerung in einem den Frequenzumrichter aufnehmenden Gehäuse angeordnet ist, welches im einfachsten Fall am Verdichtergehäuse oder in dem Verdichtergehäuse angeordnet ist.

Eine vorteilhafte Ausführung des Kältemittelverdichterverbunds sieht vor, dass die Zylinderbänke der Kolbenverdichter in Parallelbetrieb arbeiten.

Eine günstige Leistungsausbeute ist insbesondere dann erreichbar, wenn der jeweilige Kolbenverdichter pro Zylinderbank mindestens zwei Zylindereinheiten aufweist.

Die Zahl der Betriebsmodi lässt sich möglichst groß gestalten, wenn der Kolbenverdichter mehr als zwei Zylinderbänke aufweist.

Darüber hinaus betrifft die Erfindung eine Kälteanlage, umfassend einen Kältemittelverdichterverbund, einen hochdruckseitigen Wärmeübertrager, ein Expansionsorgan, und einen niederdruckseitigen Wärmeübertrager.

Erfindungsgemäß ist bei einer derartigen Kälteanlage zur Optimierung von deren Betrieb vorgesehen, dass der Kältemittelverdichterverbund nach einem der voranstehenden Ausführungsformen ausgebildet ist.

Ferner ist vorzugsweise vorgesehen, dass die Kälteanlage eine Anlagensteuerung aufweist, welche das Leistungsanforderungssignal für die Betriebszustandssteuerung erzeugt, beispielsweise je nach dem zu kühlenden Gut.

In diesem Fall besteht auch die Möglichkeit, dass die Betriebszustandssteuerung in einem Gehäuse der Anlagensteuerung angeordnet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Darstellung einer erfindungsgemäßen Kälteanlage mit einem erfindungsgemäßen Kältemittelverdichterverbund;
- Fig. 2: einen Querschnitt längs Linie 2-2 in Fig. 1 durch einen ersten Kolbenverdichter des Kältemittelverdichterverbunds der erfindungsgemäßen Kälteanlage;
- Fig. 3: einen Längsschnitt längs Linie 3-3 in Fig. 2 durch den ersten Hubkolbenverdichter;
- Fig. 4: einen Querschnitt längs Linie 4-4 in Fig. 1 durch einen zweiten Kolbenverdichter des Kältemittelverbunds;
- Fig. 5: einen Längsschnitt längs Linie 5-5 in Fig. 4 durch den zweiten Kolbenverdichter;
- Fig. 6: einen Schnitt durch eine mechanische Leistungssteuerungseinheit integriert in einen Zylinderkopf in der geöffneten Stellung eines Ventilkörpers der mechanischen Leistungssteuerungseinheit;
- Fig. 7: einen Schnitt ähnlich Fig. 6 in einer geschlossenen Stellung des Ventilkörpers der mechanischen Leistungssteuerungseinheit;
- Fig. 8: eine schematische Darstellung eines Schaltintervalls umfassend ein Öffnungsintervall und ein Schließintervall;
- Fig. 9: eine schematische Darstellung eines Verhaltens der Temperatur des niederdruckseitigen Wärmeübertragers in der Kälteanlage bei Unterbrechung der Verdichtung von Kältemittel;
- Fig. 10: eine Darstellung des Massenstromdurchsatzes des ersten Kolbenverdichters bei Drehzahlauswahl;
- Fig. 11: eine Darstellung des Massenstromdurchsatzes des zweiten Kolbenverdichters bei Zylinderauswahl;
- Fig. 12: ein Ablaufschema zur Darstellung der erfindungsgemäßen Vorgehensweise;
- Fig. 13: eine Darstellung des Gesamtmassenstromdurchsatzes des Kältemittelverdichterverbunds gemäß Fig. 1 bei unterschiedlicher Zylinderauswahl des zweiten Kolbenverdichters und Drehzahlauswahl des ersten Kolbenverdichters;
- Fig. 14: eine Darstellung eines zweiten Ausführungsbeispiels eines Kältemittelverdichterverbunds;
- Fig. 15: eine Ansicht eines Kolbenverdichters gemäß dritten Ausführungsbeispiels eines erfindungsgemäßen Kältemittelverdichterverbunds;
- Fig. 16: eine Seitenansicht eines Kolbenverdichters eines vierten Ausführungsbeispiels eines erfindungsgemäßen Kältemittelverdichterverbunds;
- Fig. 17: eine Frontansicht des vierten Ausführungsbeispiels des erfindungsgemäßen Kältemittelverdichterverbunds;
- Fig. 18: einen halbseitig versetzten Schnitt längs Linie 18-18 in Fig. 16;
- Fig. 19: einen Längsschnitt durch den Kolbenverdichter gemäß dem dritten Ausführungsbeispiel des erfindungsgemäßen Kältemittelverdichters;
- Fig. 20: einen Schnitt längs Linie 20-20 in Fig. 16 bei einem offenen Verbindungskanal zwischen Einlasskammer und Auslasskammer und
- Fig. 21: einen Schnitt ähnlich Fig. 20 bei geschlossenen Verbindungskanal zwischen der Auslasskammer und der Einlasskammer.

Ein Ausführungsbeispiel einer als Ganzes mit 10 bezeichneten erfindungsgemäßen Kälteanlage, umfasst einen Kältemittelverdichterverbund 12, von dessen Hochdruckanschluss 14 eine Hochdruckleitung 16 zu einem als Ganzes mit 18 bezeichneten hochdruckseitigen Wärmeübertrager führt, in welchem das verdichtete Kältemittel durch Abfuhr von Wärme zu einer Wärmesenke, beispielsweise umgewälzte Umgebungsluft oder andere kühlende Medien, kondensiert.

Von dem hochdruckseitigen Wärmeübertrager 18 strömt flüssiges Kältemittel zu einem Expansionsorgan 20 und von diesem zu einen niederdruckseitigen Wärmeübertrager 22 strömt.

Beispielsweise ist zwischen dem Wärmeübertrager 18 und dem Expansionsorgan 20 noch ein mittels einer Leitung mit dem Wärmeübertrager 18 verbundener Sammler 26, in welchem sich das flüssige Kältemittel sammelt und von welchem ausgehend dieses dann über eine Leitung zu dem Expansionsorgan 20 strömt.

Nach Durchströmen des niederdruckseitigen Wärmeübertragers 32 strömt das verdampfte Kältemittel über eine Leitung zu einem Niederdruckanschluss 24 des Kältemittelverdichterverbunds 12.

Der Kältemittelverdichterverbund 12 umfasst mindestens zwei zwischen dem Niederdruckanschluss 24 und dem Hochdruckanschluss 14 parallel arbeitende Kolbenverdichter 30 und 32, deren Sauganschlüsse 34a und 34b mit dem Niederdruckanschluss 24 und deren Druckanschlüsse 36a, 36b mit dem Hochdruckanschluss 14 verbunden sind.

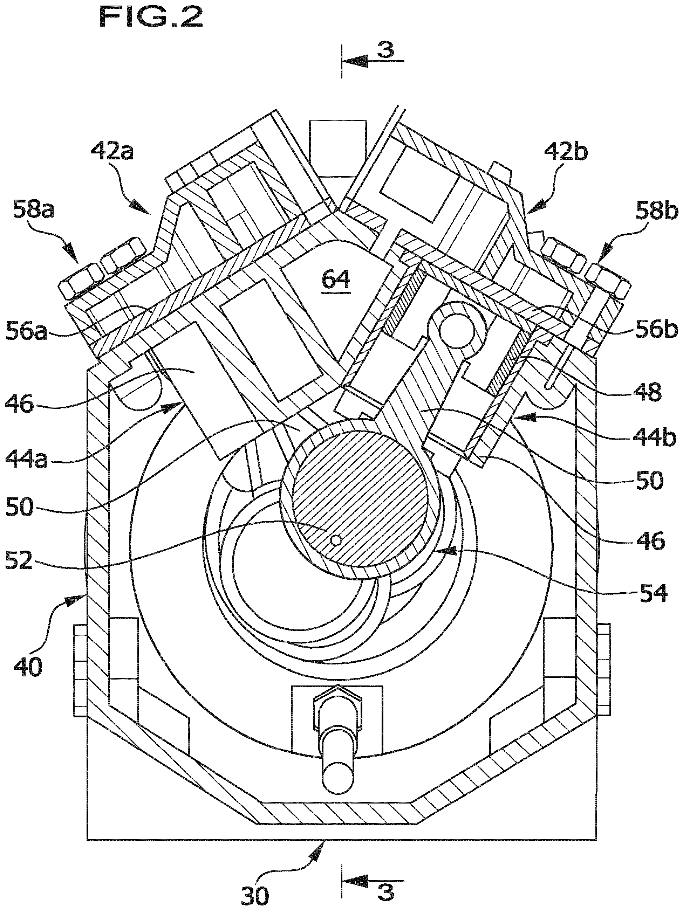

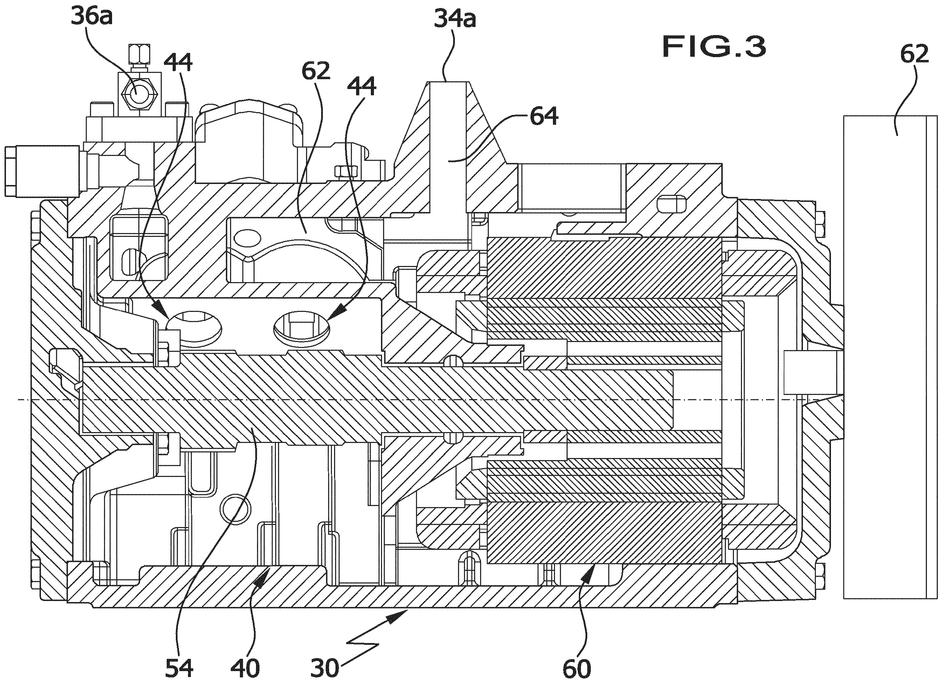

Wie in Fig. 2 und 3 dargestellt, umfasst der erste Kolbenverdichter 30 ein Verdichtergehäuse 40, in welchem beispielsweise zwei V-förmig zueinander angeordnete, parallel arbeitende Zylinderbänke 42a und 42b vorgesehen sind, von denen jede mindestens eine, insbesondere zwei oder mehr Zylindereinheiten 44 umfasst.

Jede dieser Zylindereinheiten 44 ist gebildet aus einem Zylindergehäuse 46, in welchem ein Kolben 48 dadurch oszillierend bewegbar ist, dass der Kolben 48 durch ein Pleuel 50 antreibbar ist, das seinerseits auf einem Exzenter 52 einer Exzenterwelle 54 sitzt oder von einer Kurbelwelle angetrieben ist, die beispielsweise durch einen Elektromotor 60 angetrieben ist, der als ein Synchron- oder Asynchronmotor ausgebildet sein kann.

Das Zylindergehäuse 46 jeder der Zylindereinheiten 44 wird durch eine Ventilplatte 56 abgeschlossen, auf welcher für jede der Zylinderbänke 42a, 42b ein Zylinderkopf 58a, 58b angeordnet ist.

Vorzugsweise überdeckt dabei die Ventilplatte 56 nicht nur ein Zylindergehäuse 46 einer Zylindereinheit 44, sondern sämtliche Zylindergehäuse 46 der jeweiligen Zylinderbank 42a, 42b, und in gleicher Weise übergreift der Zylinderkopf 58a, 58b ebenfalls sämtliche Zylindergehäuse 46 der jeweiligen Zylinderbank 42a, 42b.

Außerdem ist an dem Verdichtergehäuse 40 noch ein Frequenzumrichter 62 zum drehzahlgesteuerten oder drehzahlgeregelten Betrieb des Elektromotors 60 angeordnet, der den Elektromotor 60 mit einer entsprechend einer Antriebsfrequenz variierenden Spannung betreibt, die zu einer zur Antriebsfrequenz im Wesentlichen proportionalen Drehzahl führt.

Das Verdichtergehäuse 40 umfasst ferner noch einen mit dem Sauganschluss 34a in Verbindung stehenden Einlasskanal 64, welcher beispielsweise in dem Verdichtergehäuse 40 integriert ist, und den Druckanschluss 36a.

Somit ist der erste Kolbenverdichter 30 mittels des Frequenzumrichters 62 in einem Drehzahlauswahlmodus mit vorgebbarer Drehzahlauswahl D betreibbar, so dass auch dessen Massenstromdurchsatz vom Sauganschluss 34a zum Druckanschluss 36a entsprechend der Drehzahl variiert.

Der zweite Kolbenverdichter 32 weist ebenfalls ein Verdichtergehäuse 40 mit Zylinderbänken 42a und 42b auf, von denen jede ebenfalls mindestens eine, insbesondere zwei oder mehr Zylindereinheiten 44 umfasst.

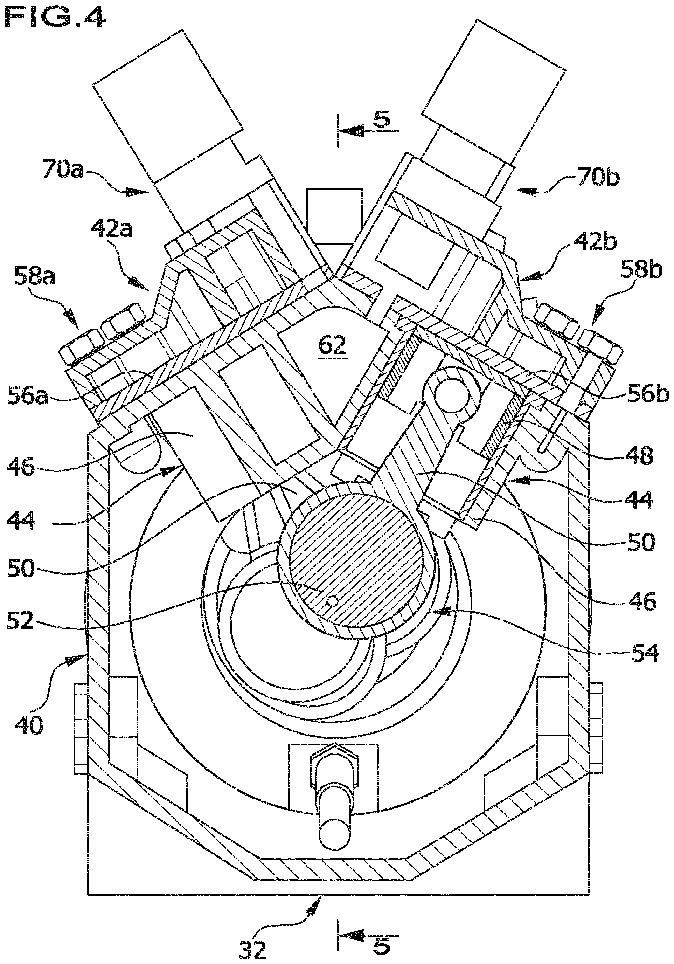

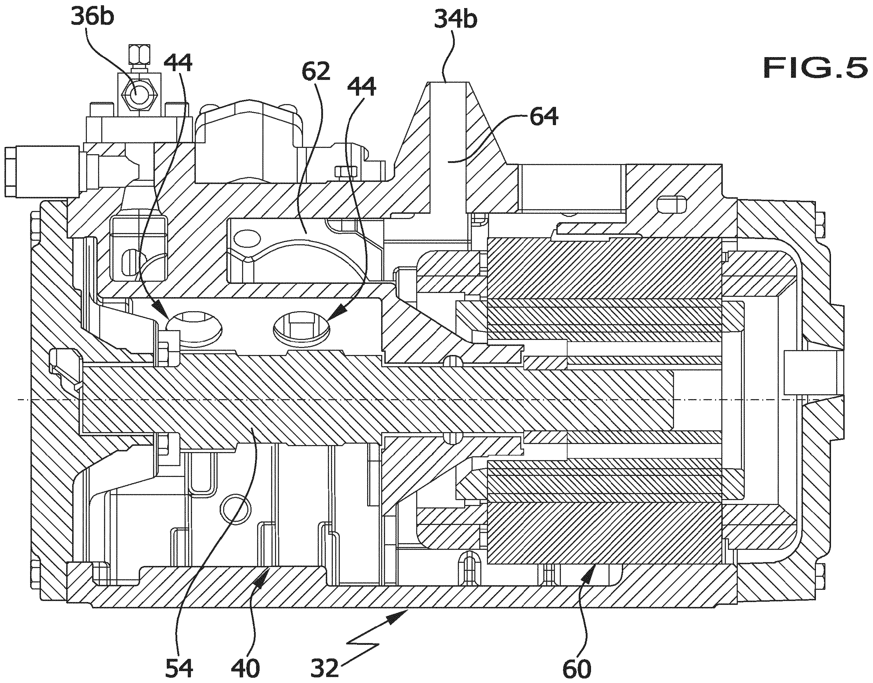

Die Zylindereinheiten 44 sind in gleicher Weise wie beim ersten Kolbenverdichter 30 ausgebildet, wie in Fig. 4 dargestellt, und ebenfalls durch einen Elektromotor 60 angetrieben, wie in Fig. 4 und 5 dargestellt.

Ferner sind die Zylindereinheiten 44 ebenfalls wie beim ersten Kolbenverdichter 30 durch eine Ventilplatte 56 und Zylinderköpfe 58 abgeschlossen.

Allerdings ist beim zweiten Kolbenverdichter 32 der Elektromotor 60 nicht mittels eines Frequenzumrichters 62 betreibbar sondern nur mit einer konstanten Drehzahl betreibbar.

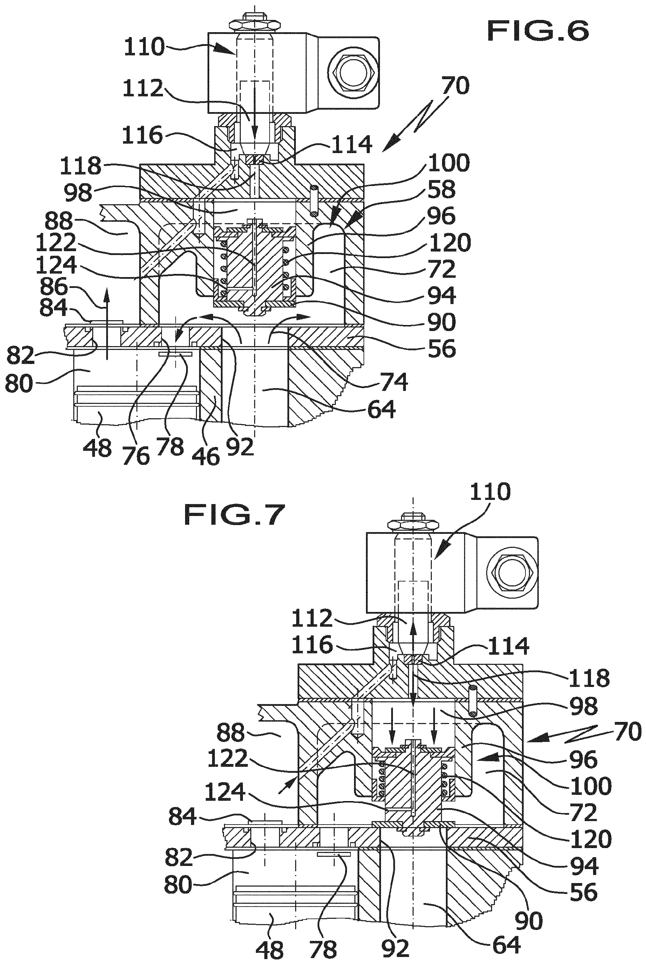

Wie in Fig. 4 vergrößert dargestellt, ist bei dem Kolbenverdichter 32 mindestens einer Zylinderbank 42, insbesondere jeder Zylinderbank 42, eine als Ganzes mit 70 bezeichnete mechanische Leistungssteuerungseinheit zugeordnet, welche dazu dient, einen von dem Einlasskanal 64 in den jeweiligen Zylinderkopf 58, und zwar in eine Einlasskammer 72 desselben, durch die Ventilplatte 56 hindurchtretenden Einlassstrom 74 von Kältemittel zuzulassen, um somit die jeweilige Zylinderbank 42 zu aktivieren, oder zu unterbrechen, um somit die jeweilige Zylinderbank 42 zu deaktivieren, wie in Fig. 6 und 7 dargestellt.

Ist die mechanische Leistungssteuerungseinheit 70 geöffnet - wie in Fig. 6 dargestellt - so hat der Einlassstrom 74 die Möglichkeit, über eine in der Ventilplatte 56 vorgesehene Einlassöffnung 76 und ein an der Ventilplatte 56 vorgesehenes Einlassventil 78 in eine von dem jeweiligen Kolben 48 und dem jeweiligen Zylindergehäuse 46 sowie der Ventilplatte 56 begrenzte Zylinderkammer 80 einzutreten, um in dieser durch die oszillierende Bewegung des Kolbens 48 verdichtet zu werden, so dass über eine Auslassöffnung 82 und ein Auslassventil 84 ein Auslassstrom 86 aus der Zylinderkammer 80 austritt und in eine Auslasskammer 88 des Zylinderkopfes 58 eintritt.

Die mechanische Leistungssteuerungseinheit 70 ist beispielsweise als Servoventil ausgebildet, welches in dem jeweiligen Zylinderkopf 58 integriert ist und einen Ventilkörper 90 aufweist, mit welchem eine in der Ventilplatte 56 vorgesehene Einströmöffnung 92 der Einlasskammer 72 verschließbar ist.

Der Ventilkörper 90 ist ferner an einem Schaltkolben 94 angeordnet, welcher in einem Schaltzylindergehäuse 96 geführt ist, so dass der Schaltkolben 94 durch einen in einer Schaltzylinderkammer 98 vorliegenden Druck in Richtung der Ventilplatte 56 bewegbar ist, um die Einströmöffnung 92 in derselben zu verschließen.

Eine aus dem Schaltzylindergehäuse 96, dem Schaltkolben 94 und der Schaltzylinderkammer 98 gebildete Schaltzylindereinheit 100, die in den Zylinderkopf 58 integriert ist, ist dabei über ein Steuerventil 110 steuerbar, welches einen elektromagnetisch bewegbaren Steuerkolben 112 umfasst, mit welchem ein Steuerventilsitz 114 verschließbar ist, wobei der Steuerkolben 112 und der Steuerventilsitz 114 dazu vorgesehen sind, eine Verbindung zwischen einem zur Auslasskammer 88 führenden Hochdruckkanal 116 und einem zu der Schaltzylinderkammer 98 führenden Druckzufuhrkanal 118 für den Schaltzylinder 100 zu unterbrechen oder freizugeben.

Wird die Verbindung zwischen dem Hochdruckkanal 116 und dem Druckzufuhrkanal 118 freigegeben, so steht die Schaltzylinderkammer 98 unter dem in der Auslasskammer 88 herrschenden Hochdruck und folglich bewegt sich der Schaltkolben 94 in Richtung der Ventilplatte 56 und presst den Ventilkörper 90 gegen diese, um die Einströmöffnung 92 in der Ventilplatte 56 zu verschließen (Fig. 7).

Dabei wirkt der auf den Schaltkolben 94 durch den Hochdruck in der Schaltzylinderkammer 98 wirkenden Kraft die Kraft eines elastischen Kraftspeichers 120 entgegen, welcher an dem Schaltzylindergehäuse 96 einerseits abgestützt ist und andererseits auf den Schaltkolben 94 derart wirkt, dass dieser sich von der Ventilplatte 56 weg bewegt und somit den Ventilkörper 90 in eine die Einströmöffnung 92 freigebende Stellung bewegt.

Insbesondere ist der Schaltkolben 94 mit einem Druckentlastungskanal 122 versehen, welcher von einer der Schaltzylinderkammer 98 zugewandten Öffnung zu einer, in Fig. 7 dargestellten Auslassöffnung 124 führt, die in der die Einströmöffnung 92 verschließenden Stellung des Ventilkörpers 90 und des Schaltkolbens 94 in die Einlasskammer 72 mündet. Der Druckentlastungskanal 124 bewirkt dabei, dass bei einer Unterbrechung der Verbindung zwischen dem Hochdruckkanal 116 und dem Druckzufuhrkanal 118 der Druck in der Schaltzylinderkammer 98 schnell zusammenbricht und sich somit der Schaltkolben 94 unter Wirkung des elastischen Kraftspeichers 120 mitsamt dem Ventilkörper 90 in eine die Einströmöffnung 92 freigebende, in Fig. 6 dargestellte Stellung bewegen.

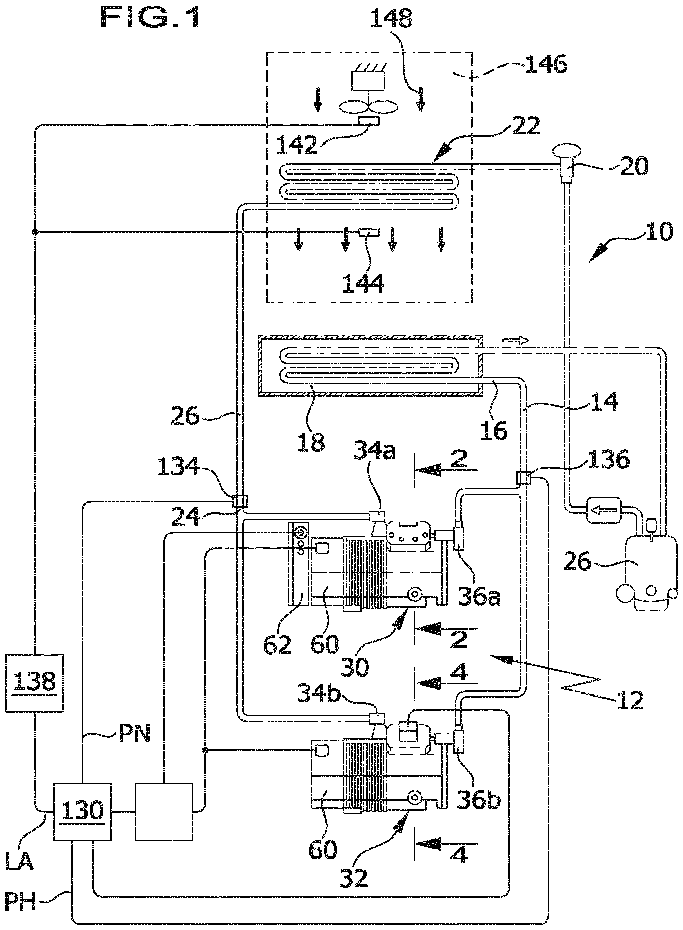

Die jeweilige mechanische Leistungssteuerungseinheit 70 ist durch eine in Fig. 1 dargestellte Betriebszustandssteuerung 130 derart ansteuerbar, dass durch diese die mechanische Leistungssteuerungseinheit 70 geschlossen oder geöffnet werden kann, um die jeweilige Zylinderbank 42a, 42b zu aktivieren oder zu deaktivieren und somit den Kältemittelverdichter 12 mit einer den Umfang der Aktivierung und Deaktivierung der Zylinderbänke 42 definierenden Zylinderauswahl Z zu betreiben.

Außerdem ist durch die Betriebszustandssteuerung 130 auch der Elektromotor 60 des ersten Kolbenverdichters 30 steuerbar, insbesondere durch Ansteuerung eines Frequenzumrichters 62 des Elektromotors 60, um diesen drehzahlvariabel gemäß der Drehzahlauswahl D betreiben zu können und dadurch einen definierten Massenstromdurchsatz zu erreichen.

Darüber hinaus erfasst die Betriebszustandssteuerung 130 den jeweiligen Gesamtmassenstromdurchsatz des Kältemittelverdichterverbunds 12, beispielsweise durch Messen des Niederdrucks PN mittels eines nahe oder am Niederdruckanschluss 24 des Kältemittelverdichterverbunds 12 angeordneten Niederdrucksensors 134 und eines Hochdrucks PH mittels eines nahe oder am Hochdruckanschluss 14 angeordneten Hochdrucksensors 136.

Ferner lässt sich mittels des Frequenzumrichters 62 auch die vom Elektromotor 60 des ersten Kolbenverdichters 30 aufgenommene elektrische Leistung erfassen.

Außerdem wird der Betriebszustandssteuerung 130 noch ein Leistungsanforderungssignal LA übermittelt, welches von einer beispielsweise übergeordneten Anlagensteuerung 138 generiert wird, die die am niederdruckseitigen Wärmeübertrager 32 angeforderte Kälteleistung zur Kühlung eines Objekts 146, beispielsweise einer Kühlkammer, erfasst, beispielsweise durch dem niederdruckseitigen Wärmeübertrager 32 zugeordnete Temperatursensoren 142 und 144, die es erlauben, die Temperaturen eines den niederdruckseitigen Wärmeübertrager 32 und das Objekt 146 durchströmenden Mediums 148, beispielsweise vor und nach dem niederdruckseitigen Wärmeübertrager 32, zu erfassen, und mit einer geforderten Temperatur des Mediums 146 zu vergleichen.

Die Betriebszustandssteuerung 130 ist in der Lage, die Kälteleistung der Kälteanlage 10 an die für die Kühlung des Objekts 146 erforderliche Kälteleistung, vorgegeben durch das Leistungsanforderungssignal LA, durch Einstellung des Gesamtmassenstromdurchsatzes einerseits mittels Zylinderauswahl Z des beim ersten Ausführungsbeispiel mit konstanter Drehzahl, beispielsweise mit einer der Netzfrequenz entsprechenden Antriebsfrequenz von 50 Hz, betriebenen zweiten Kolbenverdichters 32 und andererseits mittels Drehzahlauswahl D, das heißt durch Regelung der Drehzahl des Elektromotors 60 des ersten Kolbenverdichters 30 mittels des Frequenzumrichters, 62 anzupassen.

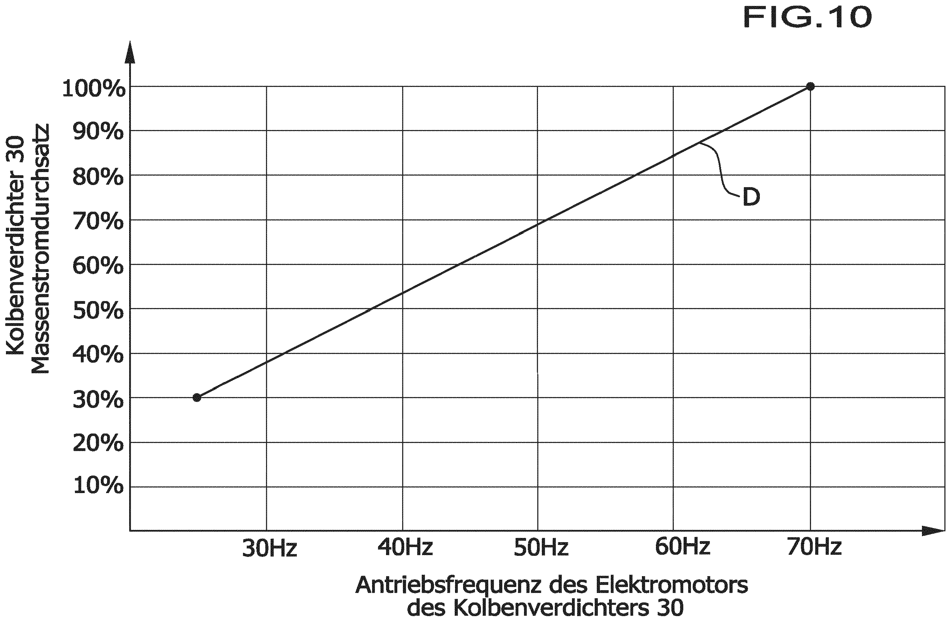

Wie in Fig. 10 dargestellt, ist der Elektromotor 60 des Kolbenverdichters 30 in einem begrenzten Drehzahlbereich betreibbar, beispielsweise vorgegeben durch vom Frequenzumrichter 62 erzeugte Antriebsfrequenzen zwischen 25 Hz und 70 Hz, so dass, wie in Fig. 10 dargestellt, der Massenstromdurchsatz des Kolbenverdichters 30 durch die Drehzahlauswahl D von ungefähr 30 % des Maximalwerts bis zum Maximalwert von 100 % variabel ist.

Der Massenstromdurchsatz des zweiten Kolbenverdichters 32 wird gesteuert durch die bei diesem durch die Ansteuerung der Leistungssteuereinheiten 70 erfolgende Zylinderauswahl Z, Z'.

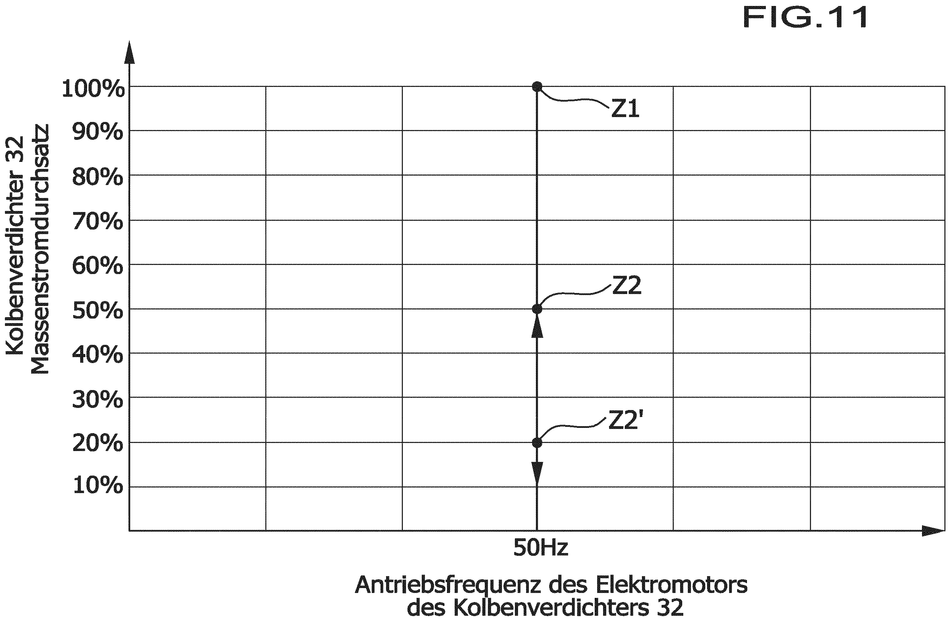

Das Aktivieren oder Deaktivieren von mindestens einer der Zylinderbänke 42a, 42b durch die Zylinderauswahl Z, kann beim Kolbenverdichter 32 bei zeitlich unmodulierter Zylinderauswahl unverändert über den gesamten Zeitraum des jeweiligen geforderten Massenstromdurchsatzes erfolgen, so dass zum Beispiel während eines bestimmten Zeitraums, bei einem Betrieb des Kolbenverdichters 32 bei der Zylinderauswahl Z1, das heißt mit beiden Zylinderbänken 42a und 42b, der maximale Massenstromdurchsatz von 100 % des Kolbenverdichters erreichbar ist, während bei der Zylinderauswahl Z2, das heißt bei einem Betrieb mit nur einer der Zylinderbänke 42a, 42b, ein Massenstromdurchsatz von 50 % erreichbar ist, wie in Fig. 11 dargestellt.

Alternativ dazu ist es aber auch bei einer zeitlich modulierten Zylinderauswahl Z' möglich, während des Zeitraums eines geforderten Massenstromdurchsatzes mindestens eine Zylinderbank 42a, 42b oder beide Zylinderbänke 42 zeitlich moduliert, das heißt beispielsweise getaktet, zu aktivieren oder deaktivieren.

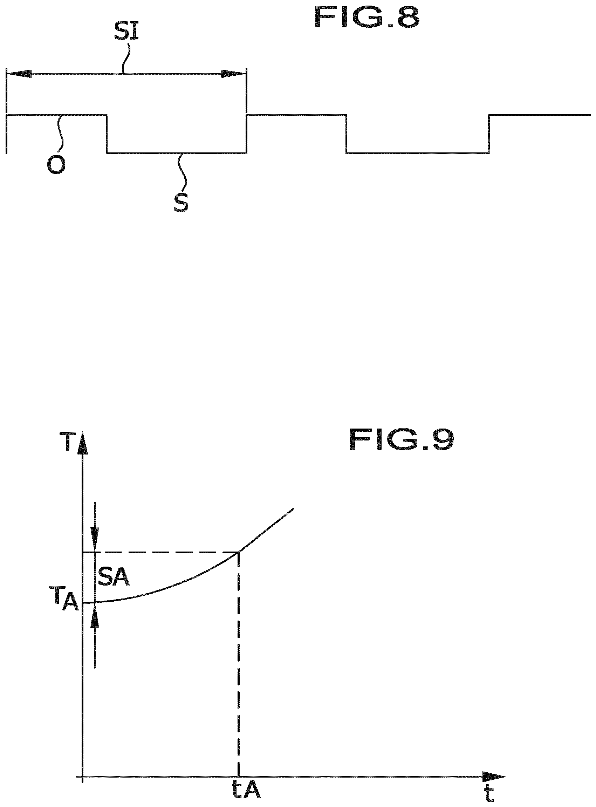

Die mechanische Leistungssteuerungseinheit 70 ist beispielsweise hierzu durch die in Fig. 1 dargestellte Betriebszustandssteuerung 130 derart ansteuerbar, dass durch diese, wie in Fig. 8 dargestellt, in kontinuierlich aufeinanderfolgenden Schaltintervallen SI die mechanische Leistungssteuerungseinheit 70 schließt und öffnet, wobei jedes der Schaltintervalle SI ein Öffnungsintervall O aufweist, in welchem der Ventilkörper 90 in seiner freigebenden Stellung ein Hindurchtreten des Einlassstroms 74 durch die Einströmöffnung 92 zulässt und die entsprechende Zylinderbank 42 aktiviert, wie in Fig. 6 dargestellt, sowie ein Schließintervall S, in welchem der Ventilkörper 90, wie in Fig. 7 dargestellt, in seiner verschließenden Stellung das Durchströmen des Einlassstroms 74 durch die Einströmöffnung 92 blockiert und somit die entsprechende Zylinderbank 42 deaktiviert.

Innerhalb der Dauer des jeweiligen Schaltintervalls SI kann nun die Zeitdauer des Öffnungsintervalls O und des Schließintervalls S relativ zueinander variabel eingestellt werden, so dass entweder das Öffnungsintervall O größer ist als das Schließintervall oder umgekehrt.

Im Extremfall kann das Öffnungsintervall O im Wesentlichen sich über die gesamte Dauer des Schaltintervalls SI erstrecken, während das Schließintervall S beliebig klein wird, oder es kann umgekehrt auch sich das Schließintervall S im Wesentlichen über die gesamte Dauer des Schaltintervalls SI erstrecken, so dass das Öffnungsintervall O beliebig klein wird.

Da in der erfindungsgemäßen Kälteanlage 10 über das Expansionsventil 20 in der Regel ständig ein Verdampfen von flüssigem Kältemittel erfolgt, würde eine Unterbrechung oder starke Variation der Verdichtung von Kältemittel durch den Kältemittelverdichterverbund 12 zu einem Anstieg der Temperatur T im niederdruckseitigen Wärmeübertrager 22 führen.

Allerdings ist das System mit einer Reaktionsträgheit versehen, so dass bei einer Unterbrechung oder einer starken Variation der Absaugung von Kältemittel aus dem niederdruckseitigen Wärmeübertrager 22 die Temperatur T des niederdruckseitigen Wärmeübertragers 32 nicht sofort ansteigt, sondern, wie in Fig. 9 dargestellt, eine Zeitdauer Z benötigt, um um einen Wert SA anzusteigen.

So lange der Wert SA bei Werten kleiner 10% einer Ausgangstemperatur T_{A} des niederdruckseitigen Wärmeübertragers liegt, sind diese Schwankungen für die Funktion der erfindungsgemäßen Kälteanlage irrelevant.

Aus diesem Grund ist das Schaltintervall SI so gewählt, dass dieses kürzer ist, als die Zeitdauer tA, die vergeht, bis die Temperatur T des niederdruckseitigen Wärmeübertragers 32 ausgehend von einer Temperatur T_{A}, des niederdruckseitigen Wärmeübertragers 32 um einen Wert SA von ungefähr 10%, noch besser ungefähr 5%, gestiegen ist, wenn eine plötzliche Unterbrechung der Absaugung von Kältemittel aus dem niederdruckseitigen Wärmeübertrager 32 und der Zufuhr von unter Hochdruck stehendem Medium am Hochdruckanschluss 14 erfolgt.

Damit ist sichergestellt, dass die Öffnungsintervalle 0 und die Schließintervalle S innerhalb des jeweiligen Schaltintervalls SI sich unwesentlich auf die Funktion der Kälteanlage auswirken und lediglich zu geringfügigen Temperaturschwankungen des niederdruckseitigen Wärmeübertragers 32 der erfindungsgemäßen Kälteanlage führen.

Üblicherweise liegen die Zeitdauern der Schaltintervalle SI bei Zeitdauern, die kürzer sind als ungefähr 10 Sekunden, noch besser kürzer als ungefähr 5 Sekunden.

Andererseits sind, um ausreichende Öffnungsintervalle O zu gewährleisten, die Schaltintervalle länger als ungefähr 1 Sekunde, noch besser länger als 2 Sekunden.

Ein bevorzugter Betriebsbereich sieht Schaltintervalle SI vor, deren Dauer zwischen 2 und 10 Sekunden liegt.

Um derart kurze Schaltintervalle SI zu gewährleisten, ist vorzugsweise vorgesehen, dass die Schaltkolben 94 mitsamt dem Ventilkörper 90 und den elastischen Kraftspeichern 120 insgesamt eine Eigenfrequenz aufweisen, die höher ist als die den maximalen Schaltintervallen SI entsprechende Frequenz, so dass die Schaltkolben 94 in der Lage sind, innerhalb der Schaltintervalle SI die Öffnungsintervalle O und die Schließintervalle S im Wesentlichen verzögerungsfrei zu realisieren.

Vorzugsweise liegen die Eigenfrequenzen der Systeme aus Schaltkolben 94, Ventilkörper 90 und elastischem Kraftspeicher 120 um einen Faktor von mindestens 5 oder noch besser mindestens 10 höher als die den Schaltintervallen SI entsprechenden Frequenzen.

Alternativ dazu besteht aber auch die Möglichkeit, mittels der Betriebszustandssteuerung eine oder beide Zylinderbänke 42a gemäß der WO 2017/129224 A1 zu aktivieren oder deaktivieren.

Durch zeitlich modulierte Zylinderauswahl Z' lässt sich der Kolbenverdichter 32, beispielsweise bei der Zylinderauswahl Z2', mit nur einer modulierten Zylinderbank 42a betreiben, während die andere Zylinderbank 42b abgeschaltet ist, lässt sich dadurch beispielsweise der Massenstromdurchsatz von 50 % bis auf 10 % des maximalen Massenstromdurchsatzes des Kolbenverdichters 32 variabel einstellen, je nachdem, wie die Zeitdauer des Öffnungsintervalls 0 relativ zum Schließintervall S gewählt wird (Fig. 11).

Ausgehend von dem ersten Ausführungsbeispiel des erfindungsgemäßen Kältemittelverdichterverbunds mit dem ersten Kolbenverdichter 30 und dem zweiten Kolbenverdichter 32 und der Annahme, dass mit dem ersten Kolbenverdichter 30 mit Drehzahlauswahl D maximal ungefähr 60% des Maximalmassenstromdurchsatzes des Kältemittelverdichterverbunds 12 erreichbar sind und mit dem zweiten Kolbenverdichter 32 bei konstanter Drehzahl, beispielsweise bei der der Netzfrequenz entsprechenden Antriebsfrequenz von 50 Hz, maximal ungefähr 40% des Maximalmassenstromdurchsatzes des Kältemittelverdichterverbunds 12 erreichbar sind, sind folgende Betriebsmodi möglich:
- um einen möglichst kleinen Gesamtmassenstromdurchsatz des Kältemittelverdichterverbunds einzustellen, wird der erste Kolbenverdichter 30 abgeschaltet und der zweite Kolbenverdichter 32 bei konstanter Drehzahl, beispielsweise bei einer der Netzfrequenz entsprechenden Antriebsfrequenz, mit der Zylinderauswahl Z2' betrieben, so dass der Gesamtmassenstromdurchsatz bezogen auf den Maximalmassenstromdurchsatz des Kältemittelverdichterverbunds 12 von ungefähr 5 % bis ungefähr 20 % variiert werden kann, so dass eine quasi kontinuierliche Variation des Gesamtmassenstromdurchsatzes in diesem Bereich mit dem zweiten Kolbenverdichter 32 als Führungsverdichter möglich ist.
- wird der erste Kolbenverdichter 30 mit Drehzahlauswahl D betrieben, lässt sich mit diesem bei abgeschaltetem zweiten Kolbenverdichter 32 ein Gesamtmassenstromdurchsatz von ungefähr 18 % bis ungefähr 60 % des Maximalmassenstromdurchsatzes des Kältemittelverdichterverbunds 12 variabel einstellen, wobei in diesem Fall der erste Kolbenverdichter 30 als Führungsverdichter arbeitet.
- werden der erste Kolbenverdichter 30 und der zweite Kolbenverdichter 32 gemeinsam betrieben, so lässt sich mit diesen je nach Drehzahlauswahl D des ersten Kolbenverdichters 30 und Zylinderauswahl Z oder Z' des zweiten Kolbenverdichters 32 ein Gesamtmassenstromdurchsatz von ungefähr 38 % bis ungefähr 100 % des Maximalmassenstromdurchsatzes des Kältemittelverdichterverbunds 12 variabel einstellen, wobei in diesen Fällen der erste Kolbenverdichter 30 als Führungsverdichter arbeitet.

Im einfachsten Fall betreibt die Betriebszustandssteuerung 130 den Kältemittelverdichterverbund 12 bei einem Gesamtmassenstromdurchsatz von ungefähr 5 % bis 15 % oder mehr, maximal ungefähr 20 %, mit dem zweiten Kolbenverdichter 32 bei konstanter Drehzahl und Zylinderauswahl Z2' als Führungsverdichter und abgeschaltetem ersten Kältemittelverdichter 30.

Danach erfolgt ein Abschalten des zweiten Kältemittelverdichters 32 und Einschalten des ersten Kältemittelverdichters 30 als Führungsverdichter bei einem Gesamtmassenstromdurchsatz beginnend bei ungefähr 15 % oder spätestens bei ungefähr 20 % bis zu einem Gesamtmassenstromdurchsatz zwischen 38 % und 60 % des Maximalmassenstromdurchsatzes des Kältemittelverdichterverbunds 12.

Ausgehend von einem Bereich zwischen 38 % und 60 % des Gesamtmassenstromdurchsatzes erfolgt ein Betrieb beider Kolbenverdichter 30 und 32 mit der Kombination der Drehzahlauswahl D beim ersten Kolbenverdichter 30 als Führungsverdichter und der Zylinderauswahl Z, Z' beim zweiten Kolbenverdichter 32 bei konstanter Drehzahl zunächst mit der Zylinderauswahl Z2 bis zum Erreichen von ungefähr 60% des Maximalmassenstromdurchsatzes des Kältemittelverdichterverbunds 12 und dann mit einer Zylinderauswahl Z1, d.h. Einsatz aller Zylinderbänke 42a, b des zweiten Kolbenverdichters 32 bei konstanter Drehzahl bis zum Erreichen des Gesamtmassenstromdurchsatzes von 100 % des Maximalmassenstromdurchsatzes des Kältemittelverdichterverbunds 12 wobei in diesem Fall der erste und der zweite Kolbenverdichter 30, 32 jeweils ihren maximalen Massenstromdurchsatz von jeweils 50 % des Maximalmassenstromdurchsatzes des Kältemittelverdichterverbunds 12 erzeugen.

Bei einer weiteren Ausführungsform ist die Betriebszustandssteuerung 130 in der Lage, den Gütegrad oder COP des Kältemittelverdichterverbunds 12 in Abhängigkeit von der jeweiligen Zylinderauswahl Z oder Z' beim zweiten Kolbenverdichter 32 und der Drehzahlauswahl D beim ersten Kolbenverdichter 30 bei dem jeweiligen Gesamtmassenstromdurchsatz zu erkennen oder erfassen, wobei der Gütegrad oder COP insbesondere von dem eingesetzten Kältemittel, der Drehzahl der Elektromotoren 60 der Kolbenverdichter 30 und 32, der Zahl der aktiven Zylinderbänke 42 und dem Verhältnis von Hochdruck PH zu Saugdruck PS abhängig ist.

Der Gütegrad oder COP wird im Fall einer genauen Berechnung beispielsweise gemäß der Veröffentlichung:
Compressors and condensing units for refrigeration - Performance testing and test methods - Part 1, Refrigerant compressors
insbesondere Kapitel 4.1.5.2 und beispielsweise Gleichung 7,
von European Standard,
CEN/TC 113, Date 2014-04, prEN 13 771-1:2014, ermittelt.

Alternativ oder ergänzend dazu ist die Betriebszustandssteuerung 130 auch in der Lage die elektrische Leistungsaufnahme des Verdichterverbunds 12 in Abhängigkeit von der jeweiligen Zylinderauswahl Z oder Z' beim Kolbenverdichter 32 und der Drehzahlauswahl D beim Kolbenverdichter 30 bei dem jeweiligen Betriebszustand zu erfassen.

Mittels der Betriebszustandssteuerung 130 besteht bei dem Kältemittelverdichterverbund 12 somit die Möglichkeit, in einem Fall, in dem mehrere Möglichkeiten der Zylinderauswahl Z oder Z' des Kolbenverdichters 32 und der Drehzahlauswahl D des Kolbenverdichters 30 zur Realisierung eines durch das Leistungsanforderungssignal LA geforderten Gesamtmassenstromdurchsatzes zur Verfügung stehen, den Betrieb des Kältemittelverdichterverbunds 12 im Hinblick auf eine möglichst große Effizienz, die sich in einem möglichst hohen Gütegrad oder COP oder einer möglichst niedrigen elektrischen Leistungsaufnahme des Elektromotors 60 äußert, bei den jeweiligen Gesamtmassenstromdurchsätzen zu optimieren, und zwar durch geeignete Zylinderauswahl Z oder Z' und Drehzahlauswahl D, um den Betrieb in dem geforderten Gesamtmassenstromdurchsatz durchzuführen.

Diese Berücksichtigung oder Ermittlung des Gütegrades oder COP oder der elektrischen Leistungsaufnahme für den jeweiligen Gesamtmassenstromdurchsatz kann vorab erfolgen oder bei laufendem Betrieb des Kältemittelverdichterverbunds 12 durch Abfragen von vorab im Rahmen von Testläufen ermittelten und in der Betriebszustandssteuerung 130 abgespeicherten Daten erfolgen.

Hierzu werden zu dem jeweiligen Gesamtmassenstromdurchsatz die jeweiligen möglichen Betriebsmodi, umfassend Zylinderauswahl Z oder Z' und der Drehzahlauswahl D, ermittelt und diesen jeweils ein Gütegrad oder COP oder eine elektrische Leistungsaufnahme zugeordnet, so dass die Betriebszustandssteuerung 130 für den durch das Leistungsanforderungssignal LA geforderten Gesamtmassenstromdurchsatz die Zylinderauswahl Z oder Z' und Drehzahlauswahl D mit dem jeweils günstigsten Gütegrad oder COP auswählen und den Kältemittelverdichterverbund 12 entsprechend betreiben kann.

Eine weitere Möglichkeit sieht vor, den Kältemittelverdichterverbund 12 bei dem jeweiligen Gesamtmassenstromdurchsatz zu betreiben und die von den Elektromotoren 60 der Kolbenverdichter 30 und 32 aufgenommene Leistung bei jedem Gesamtmassenstromdurchsatz zu erfassen, so dass dann die Betriebszustandssteuerung 130 die Zylinderauswahl Z oder Z' und Drehzahlauswahl D mit der geringsten elektrischen Leistungsaufnahme mit der größten Effizienz bewerten, abspeichern und zukünftig nur diese Zylinderauswahl Z oder Z' und Drehzahlauswahl D als diejenige mit der größten Effizienz für diesen Gesamtmassenstromdurchsatz einsetzen kann.

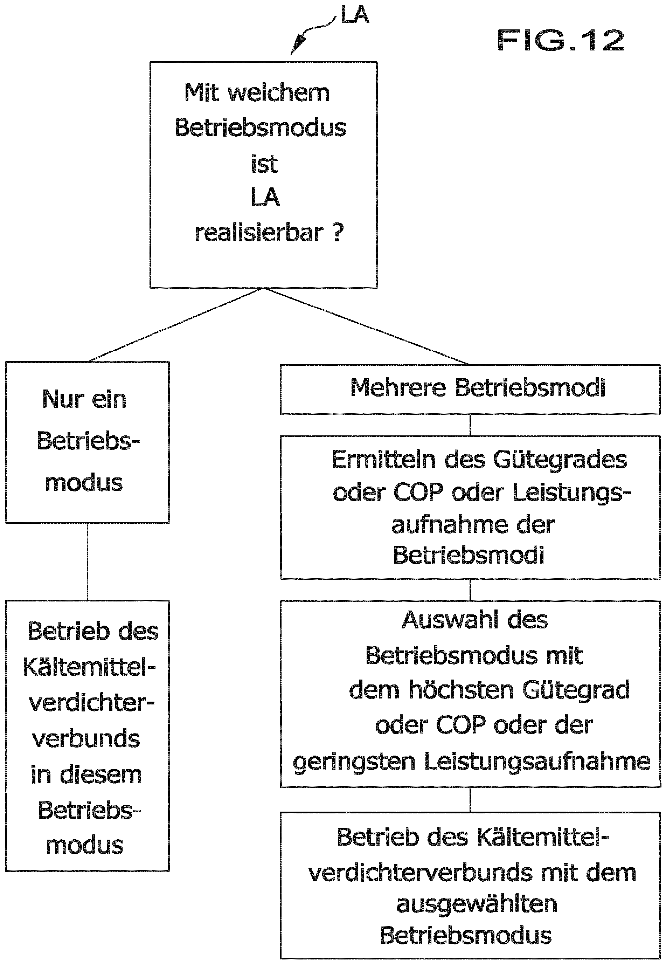

Die Vorgehensweise bei der Auswahl des möglichen Betriebsmodus B durch die Betriebszustandssteuerung 130 ist in Fig. 12 dargestellt.

Zunächst wird bei einer bei der Betriebszustandssteuerung 130 eingehenden Leistungsanforderung LA geprüft, ob zur Realisierung dieser Leistungsanforderung LA nur ein Betriebsmodus, das heißt nur eine Zylinderauswahl Z oder Z' und Drehzahlauswahl D, oder mehrere Betriebsmodi, das heißt mehrere Zylinderauswahlen Z oder Z' und Drehzahlauswahlen D, zur Verfügung stehen.

In der Regel steht bei einem Gesamtmassenstromdurchsatz der nahe an der Maximalleistung des Kältemittelverdichterverbunds 12 liegt nur eine Zylinderauswahl Z und Drehzahlauswahl D zur Verfügung, nämlich eine Zylinderauswahl bei der alle Zylinderbänke 42 des Kolbenverdichters 32 in vollem Umfang aktiviert sind und durch Regelung der Drehzahl des Antriebsmotors 60 des Kolbenverdichters 30 die Anpassung an den Gesamtmassenstromdurchsatz erfolgt.

Bei Gesamtmassenstromdurchsätzen die im mittleren oder niedrigen Bereich liegen stehen in der Regel mehrere Betriebsmodi, das heißt Zylinderauswahlen Z oder Z' und Drehzahlauswahlen D, zur Auswahl, je nachdem wieviel Zylinderbänke 42 vorhanden sind und ob der Kältemittelverdichterverbund 12 mit unmodulierten oder zeitlich modulierten Zylinderauswahlen Z oder Z' betrieben werden kann.

Zu diesen Zylinderauswahlen Z oder Z' des Kolbenverdichters 32 erfolgt dann für den jeweiligen Betriebsmodus jeweils die Ermittlung der für die

Realisierung des geforderten Gesamtmassenstromdurchsatzes erforderlichen Drehzahlauswahl D des Elektromotors 60 des Kolbenverdichters 30, und basierend hierauf dann für den jeweiligen Betriebsmodus eine Berücksichtigung oder eine Ermittlung des Gütegrades oder des COP oder der elektrischen Leistungsaufnahme in der vorstehend beschriebenen Art und Weise.

Mit dem dem jeweiligen Betriebsmodus, umfassend eine Zylinderauswahl Z oder Z' und Drehzahlauswahl D, zugeordneten Gütegrad oder COP oder der elektrischen Leistungsaufnahme ist die Auswahl des Betriebsmodus mit dem besten Gütegrad oder COP oder der niedrigsten elektrischen Leistungsaufnahme möglich, der dann von der Betriebszustandssteuerung 130 zum Betrieb des Kältemittelverdichterverbunds 12 eingesetzt wird, um den durch das Leistungsanforderungssignal LA geforderten Gesamtmassenstromdurchsatz zu realisieren.

Die vorstehend erläuterte allgemeine Vorgehensweise lässt sich nachfolgend an einem einfachen Beispiel des eingangs beschriebenen ersten Ausführungsbeispiels des Kältemittelverdichterverbunds 12 gemäß Fig. 1 anhand einer vereinfachten Vorgehensweise zur Bestimmung des Gütegrades oder COP oder der elektrischen Leistungsaufnahme erläutern.

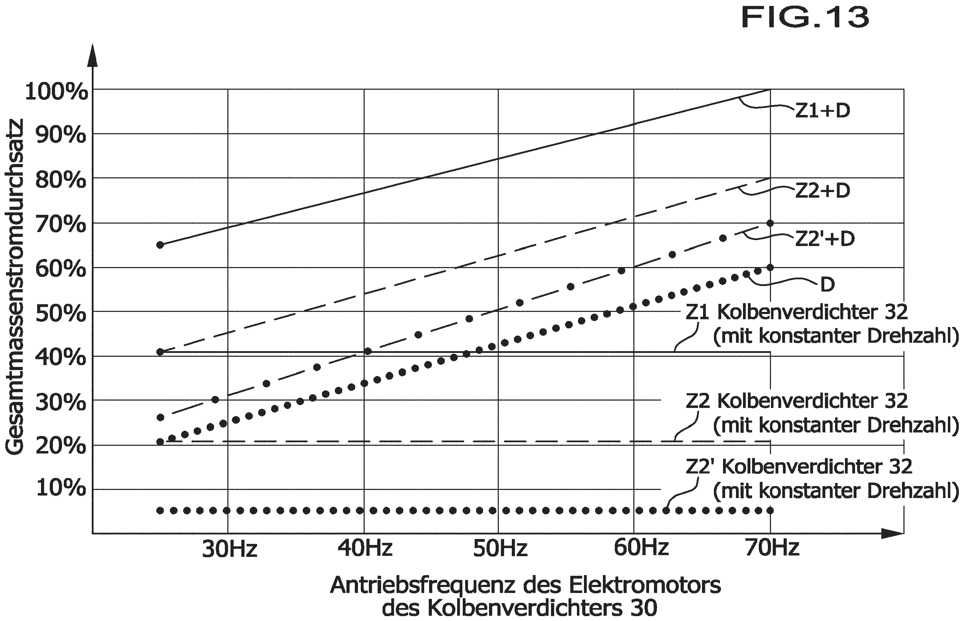

Bei dem Kältemittelverdichterverbund 12, der gemäß dem ersten Ausführungsbeispiel zwei Zylinderbänke 42a und 42b je Kolbenverdichter 30, 32 aufweist, gibt es beim Gesamtmassenstromdurchsatz bei einer Beschränkung des zweiten Kolbenverdichters 32 auf einen Betrieb mit konstanter Drehzahl und die unmodulierte Zylinderauswahl Z nur die Möglichkeit, diesen bei einer ersten Zylinderauswahl Z1 zu betreiben, in der beide Zylinderbänke 42a und 42b aktiv sind, oder in einer zweiten Zylinderauswahl Z2 zu betreiben, in dem nur eine der Zylinderbänke 42a, 42b aktiv und die andere inaktiv ist, wobei der Beitrag von derartigen Zylinderauswahlen Z1, Z2 zum Gesamtmassenstromdurchsatz in Fig. 13 dargestellt ist.

Bei jeder unmodulierten Zylinderauswahl Z1 und Z2 des zweiten Kolbenverdichters 32 besteht die Möglichkeit durch Drehzahlauswahl D die Drehzahl des Elektromotors 60 des ersten Kolbenverdichters 30 mittels des Frequenzumrichters 62, beispielsweise durch Variation der Antriebsfrequenz des Frequenzumrichters 62 zwischen 25 Hz und 70 Hz, zu variieren, wobei der Beitrag des Kolbenverdichters 30 zum Gesamtmassenstromdurchsatz bei der jeweiligen Drehzahlauswahl D ebenfalls in Fig. 13 dargestellt ist.

Da bei einem Gesamtmassenstromdurchsatz über 80 % alle Zylinderbänke 42a, 42b aktiv sein müssen, sind diese nur mittels der Zylinderauswahl Z1 realisierbar, und ein Gesamtmassenstromdurchsatz unter 80 % ist auch durch Deaktivieren einer der Zylinderbänke 42a, 42b und somit mittels der Zylinderauswahl Z2 realisierbar, so dass bei Gesamtmassenstromdurchsätzen zwischen 65 % und 80 % eine Optimierung durch Berücksichtigung des Gütegrades oder COP oder der elektrischen Leistungsaufnahme möglich ist, da der Kolbenverdichter 32 des Kältemittelverdichterverbunds 12 bei den Gesamtmassenstromdurchsätzen zwischen 65 % und 80 % entweder mit ersten Zylinderauswahl Z1 oder der zweiten Zylinderauswahl Z2 betrieben werden kann.

Die Auswahl zwischen der zeitlich unmodulierten ersten Zylinderauswahl Z1 und der zeitlich unmodulierten zweiten Zylinderauswahl Z2 ist daher durch Ermittlung des Gütegrades oder COP oder der elektrischen Leistungsaufnahme möglich, wobei der Kolbenverdichter 30 mit der geeigneten Drehzahlauswahl D betrieben werden kann.

Um beispielsweise eine vereinfachte Berücksichtigung des Gütegrades oder COP oder der elektrischen Leistungsaufnahme durchführen zu können, werden die möglichen Leistungszustände zwischen 65 % und 80 % in zwei Gruppen unterteilt und zwar beispielsweise im einfachsten Fall in Abhängigkeit von dem durch den Hochdrucksensor 136 erfassten Hochdruck PH.

Liegt bei einem bestimmten Kältemittel beispielsweise der Hochdruck PH über einem Hochdruckgrenzwert PHG, so wird die zeitlich unmodulierte Zylinderauswahl Z2 gewählt, liegt der Hochdruck PH unter dem Grenzwert PHG, so wird die zeitlich unmodulierte Zylinderauswahl Z1 gewählt.

Eine ähnliche Berücksichtigung des Gütegrades oder COP oder der elektrischen Leitungsaufnahme ist bei einem Gesamtmassenstromdurchsatz zwischen ungefähr 40% und ungefähr 60% des Maximalmassenstromdurchsatzes möglich, nämlich entweder durch einen Betrieb des ersten Kolbenverdichters 30, mit Drehzahlauswahl D und einer durch eine Antriebsfrequenz zwischen ungefähr 50 Hz und ungefähr 70 Hz vorgebbaren Drehzahl des Elektromotors 60 und abgeschaltetem zweiten Kolbenverdichter 32 oder durch einen Betrieb des ersten Kältemittelverdichters 30 mit Drehzahlauswahl D und einer Antriebsfrequenz zwischen ungefähr 25 Hz und ungefähr 45 Hz sowie kombiniert mit dem zweiten Kolbenverdichter 32 mit konstanter Drehzahl und der unmodulierten Zylinderauswahl Z2.

Bei den unmodulierten Zylinderauswahlen Z1 und Z2 wird jeweils zeitlich konstant die entsprechende Zylinderbank aktiviert oder deaktiviert und dies während der gesamten Zeit, während welcher ein Gesamtmassenstromdurchsatz realisiert wird.

Das erste Ausführungsbeispiel des erfindungsgemäßen Kältemittelverdichterverbunds bietet aber aufgrund der Tatsache, dass zeitlich modulierte Zylinderauswahlen Z' ebenfalls realisiert werden können, bei welchen während aufeinanderfolgender Schaltintervalle SI zeitanteilig eine Aktivierung oder Deaktivierung der jeweiligen Zylinderbank 42 erfolgen kann, die Möglichkeit, beispielsweise bei Auswahl nur einer der Zylinderbänke 42 und durch Taktung der Aktivierung und Deaktivierung dieser einen Zylinderbank 42 innerhalb der Schaltintervalle SI, sowie dauernder Deaktivierung der anderen Zylinderbank 42 beispielsweise eine Zylinderauswahl Z2' des zweiten mit konstanter Drehzahl betriebenen Kolbenverdichters 32 auszuwählen, bei welcher noch niedrigere Leistungszustände möglich sind, wobei dann beispielsweise in einem Gesamtmassenstromdurchsatz zwischen 5 % und 25 % die Möglichkeit besteht, den Betrieb des Kältemittelverdichterverbunds 12 ebenfalls hinsichtlich des Gütegrades oder COP oder der elektrischen Leistungsaufnahme durch eine Auswahl zwischen Zylinderauswahl Z2 oder der zeitlich modulierten Zylinderauswahl Z2' bei Variationen der zeitlichen Modulation zu optimieren (Fig. 13).

Außerdem besteht zwischen dem Gesamtmassenstromdurchsatz von 25 % bis 80 % durch Variation der zeitlichen Modulation der Zylinderauswahl Z2' des zweiten mit konstanter Drehzahl betriebenen Kolbenverdichters 32 die Möglichkeit der Optimierung, wenn dieser mit dem mit Drehzahlauswahl D betriebenen ersten Kolbenverdichter kombiniert wird.

Vereinfacht kann ebenfalls bei einem Hochdruck PH, der über dem Hochdruckgrenzwert PHG liegt, die Zylinderauswahl Z2' gewählt werden, während bei einem Hochdruck PH, der unter dem Grenzwert PHG liegt, die Zylinderauswahl Z2 gewählt wird.

Diese Verhältnisse können sich aber auch je nach verwendetem Kältemittel umkehren.

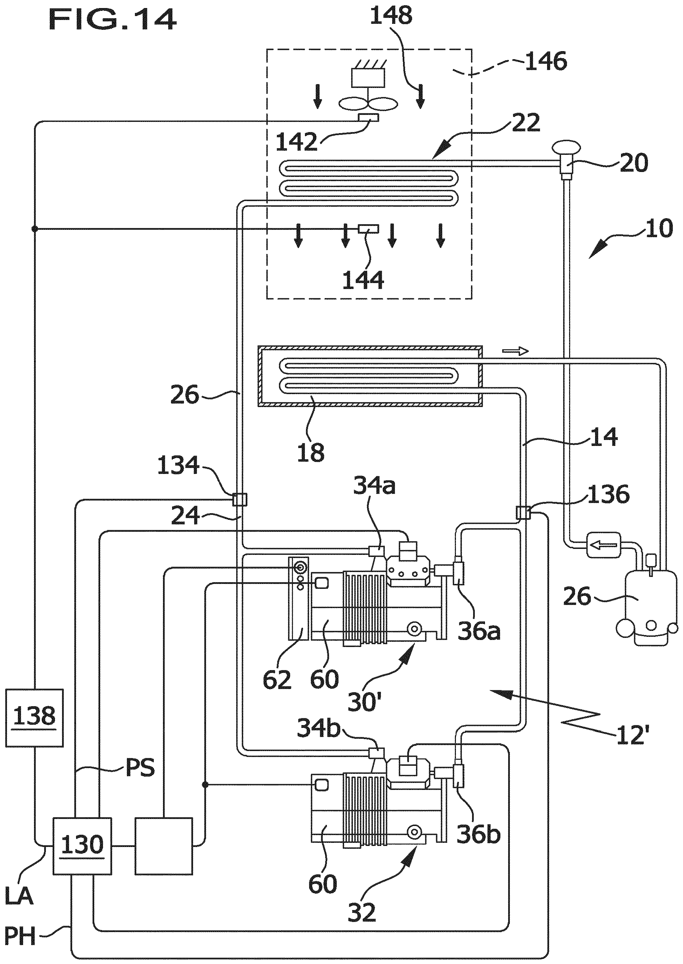

Bei einem zweiten Ausführungsbeispiel einer erfindungsgemäßen Kälteanlage, dargestellt in Fig. 14, sind diejenigen Elemente, die mit denen des ersten Ausführungsbeispiels identisch sind, mit denselben Bezugszeichen versehen, so dass hinsichtlich der Beschreibung derselben auf die Ausführungen zum ersten Ausführungsbeispiel Bezug genommen werden kann.

Im Gegensatz zum ersten Ausführungsbeispiel ist bei dem zweiten Ausführungsbeispiel der Verdichterverbund 12' gebildet aus dem Kolbenverdichter 30' und dem Kolbenverdichter 32, der mit dem ersten Kolbenverdichter identisch ist.

Im Gegensatz zum ersten Ausführungsbeispiel ist der Kolbenverdichter 30' nicht nur mit dem Frequenzumrichter 62 versehen, sondern es sind, wie in der Fig. 4 dargestellt, beide Zylinderbänke 42a und 42b jeweils mit einer als Ganzes mit 70 bezeichneten mechanischen Leistungssteuereinheit versehen, so dass die jeweilige Zylinderbank 42a und 42b abschaltbar ist, wie im Zusammenhang mit dem Kolbenverdichter 32 des ersten Ausführungsbeispiels erläutert.

Somit besteht bei dem Verdichterverbund 12' des zweiten Ausführungsbeispiels die Möglichkeit, jeden der Kolbenverdichter 30' und 32 mit einer Zylinderauswahl Z1 oder Z2 oder Z2' zu betreiben und zusätzlich noch den Kolbenverdichter 30' mit Hilfe des Frequenzumrichters 62 mit Drehzahlauswahl D zu betreiben, die sich multiplikativ auf die Zylinderauswahl Z1, Z2 oder Z2' des Kolbenverdichters 30' auswirkt.

Somit besteht beim zweiten Ausführungsbeispiel die Möglichkeit den Gesamtmassenstromdurchsatz dadurch einzustellen, dass einerseits bei dem mit fester Drehzahl arbeitenden zweiten Kolbenverdichter 32 der Massenstromdurchsatz durch die Zylinderauswahl Z1, Z2 oder Z2' einstellbar ist, in gleicher Weise wie im Zusammenhang mit dem ersten Ausführungsbeispiel beschrieben und außerdem ist aber bei dem zweiten Ausführungsbeispiel bei dem ersten Kolbenverdichter 30' für den Gesamtmassenstromdurchsatz nicht nur die Drehzahlauswahl entscheidend, sondern auch noch die Zylinderauswahl Z1, Z2 oder Z2'. Damit sind bei dem zweiten Ausführungsbeispiel der erfindungsgemäßen Kältemittelverdichterverbunds noch mehr Möglichkeiten vorhanden, den dem Leistungsanforderungssignal LA erforderlichen Gesamtmassenstromdurchsatz hinsichtlich des Kältemittelausstoßes im Hinblick auf den Gütegrad COP oder die elektrische Leistungsaufnahme zu optimieren.

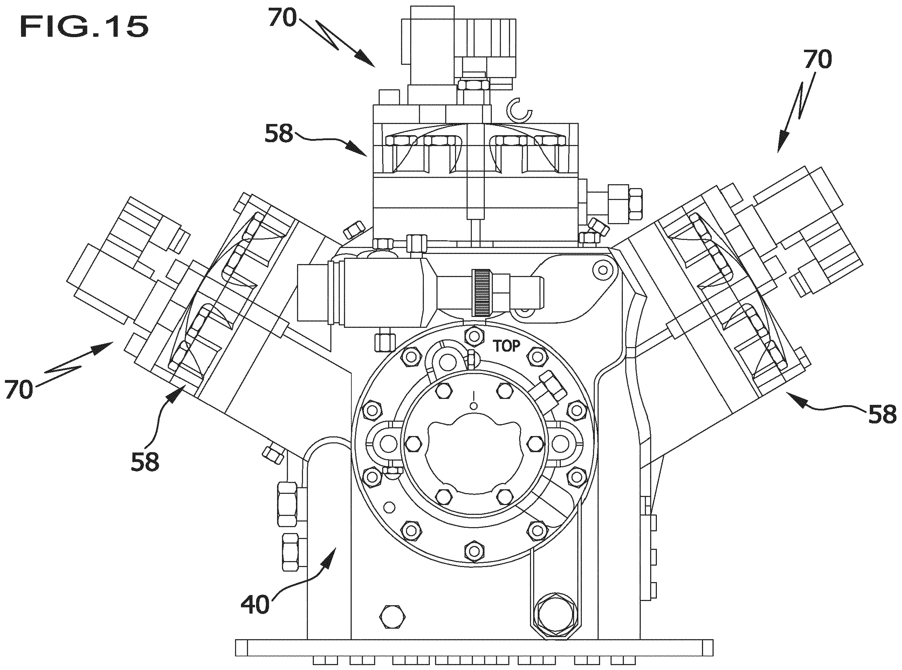

Werden gemäß einem dritten Ausführungsbeispiel eines Kältemittelverdichterverbunds 12 beispielsweise beide Kolbenverdichter 30 und 32 oder nur einer derselben mit drei Zylinderbänken 42a, 42b und 42c versehen (Fig. 15), beispielsweise mit jeweils zwei Zylindern pro Zylinderbank 42, wobei jede der Zylinderbänke 42a, 42b, und 42c mittels eines zugeordneten mechanischen Leistungssteuerungseinheit 70 einzeln aktivierbar oder deaktivierbar ist, so sind drei Zylinderauswahlen Z1, Z2, Z3 möglich, nämlich die erste Zylinderauswahl Z1 mit allen Zylinderbänken 42a, 42b und 42c im aktivierten Zustand, eine zweite Zylinderauswahl Z2 mit zwei der Zylinderbänke 42 im aktivierten Zustand und eine dritte Zylinderauswahl Z3 mit nur einer der Zylinderbänke 42 im aktivierten Zustand.

Hinsichtlich des Aufbaus im Einzelnen entspricht das dritte Ausführungsbeispiel dem ersten Ausführungsbeispiel.

Damit eröffnen sich für den jeweiligen durch die Leistungsanforderung LA angeforderten Gesamtmassenstromdurchsatz die unterschiedlichsten Möglichkeiten, um diesen zu realisieren.

Wird beispielsweise nur der zweite Kolbenverdichter 32 mit drei zuschaltbaren Zylinderbänken 42a, 42b und 42c versehen, so eröffnet dieser bereits bei einer unmodulierten Zylinderauswahl Z die Möglichkeit, den Massenstromdurchsatz dieses Kolbenverdichters 32 zwischen 33 %, 66 % und 100 % des möglichen Massenstromdurchsatzes derselben zu variieren und entsprechend den Massenstromdurchsatz des ersten Kolbenverdichters 30 zu ergänzen.

Der erste Kolbenverdichter 30 kann dabei im einfachsten Fall keine abschaltbaren Zylinderbänke 42 aufweisen und somit lediglich durch Drehzahlauswahl einen variablen Kältemittelausstoß erzeugen, der beispielsweise zwischen ungefähr 50 und 100 % des Kältemittelausstoßes desselben variierbar ist.

Wird jedoch auch der erste Kolbenverdichter 30 mit drei jeweils zu und abschaltbaren Zylinderbänken 42a, 42b und 42c versehen, so wird allein durch die Zylinderauswahl Z dessen Massenstromdurchsatz zwischen maximal 33 %, maximal 66 % und maximal 100 % einstellbar und zusätzlich noch jeweils durch Reduzierung der Drehzahl aufgrund der Drehzahlauswahl D bei jeder Zylinderauswahl deren Massenstromdurchsatz um 70 % reduzierbar, also minimal ein Massenstromdurchsatz bei einer Zylinderbank von ungefähr 11 %, bei zwei Zylinderbänken von ungefähr 22 % und bei drei zugeschalteten Zylinderbänken minimal 33 % variierbar.

Desgleichen lassen sich zusätzliche Variationen noch durch eine zeitlich modulierte Zylinderauswahl Z' erreichen.

Ein viertes Ausführungsbeispiel eines Kältemittelverdichterverbunds, der insbesondere für das COz als Kältemittel geeignet ist, umfasst Kolbenverdichter 30" und 32" mit jeweils einen Sauganschluss 34" und einen Druckanschluss 14".

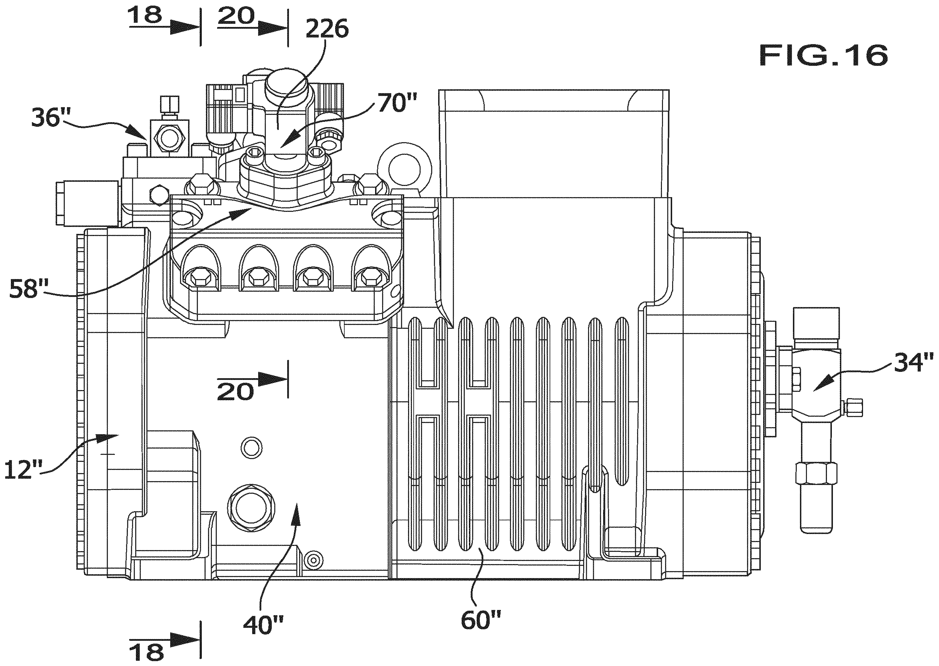

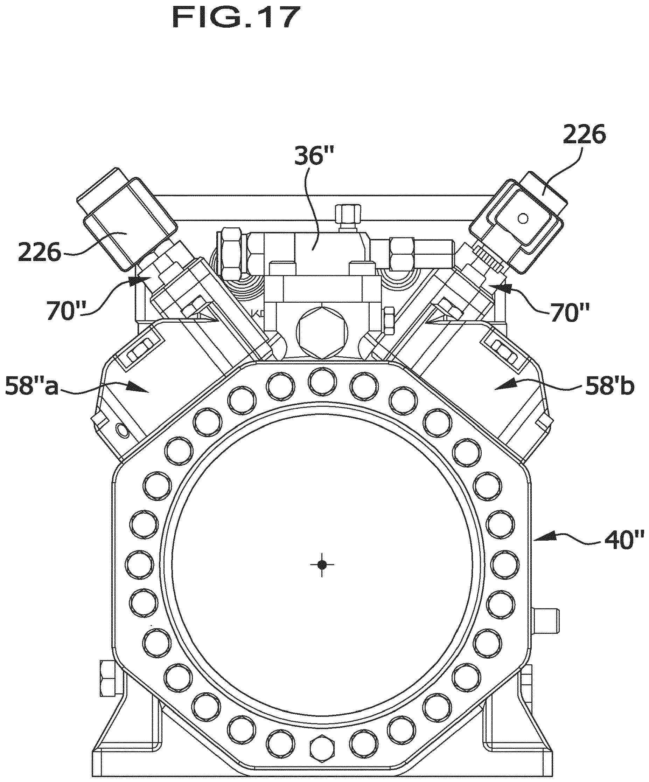

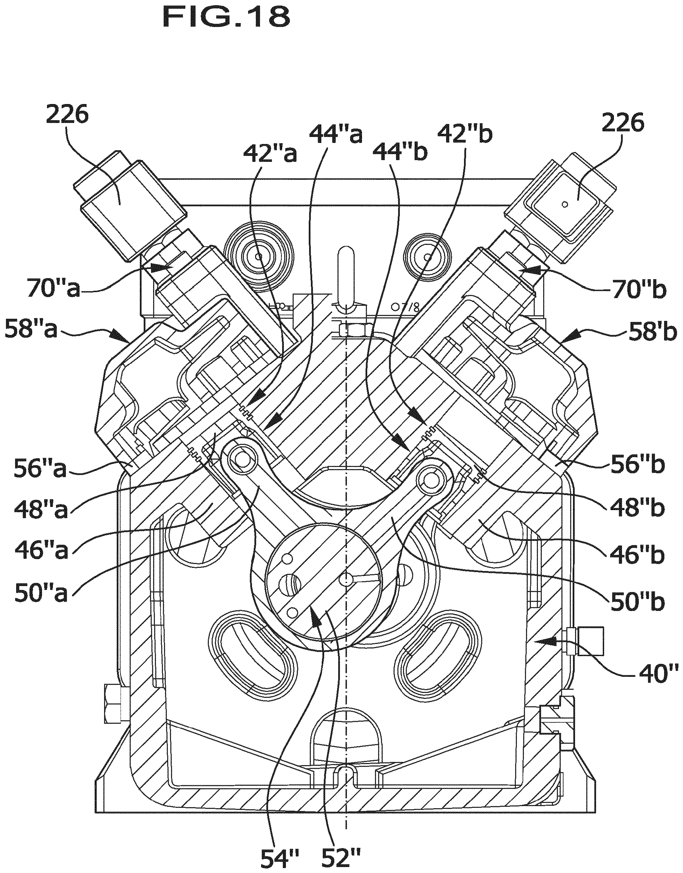

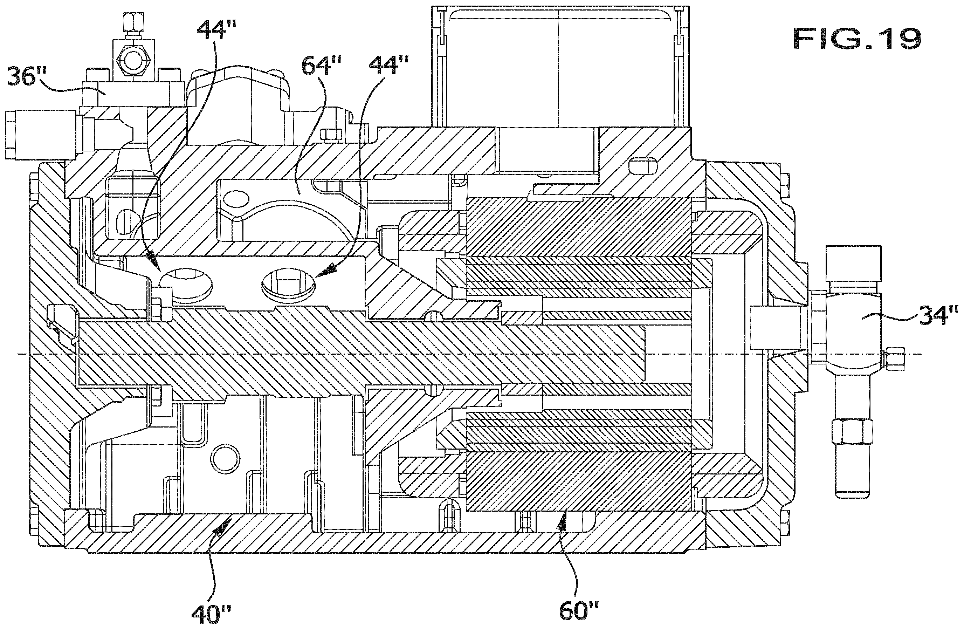

Wie in Fig. 16 bis 21 dargestellt, umfasst der jeweiligen Kolbenverdichter ein Verdichtergehäuse 40", in welchem beispielsweise zwei V-förmig zueinander angeordnete, parallel arbeitende Zylinderbänke 42"a und 42"b vorgesehen sind, von denen jede mindestens eine, insbesondere zwei oder mehr Zylindereinheiten 44" umfasst.

Jede dieser Zylindereinheiten 44" ist gebildet aus einem Zylindergehäuse 46", in welchem jeweils ein Kolben 48" dadurch oszillierend bewegbar ist, dass der Kolben 48" durch jeweils ein Pleuel 50" antreibbar ist, das seinerseits auf einem Exzenter 52" einer Exzenterwelle 54" sitzt, die beispielsweise durch einen Elektromotor 60" angetrieben ist, der als ein Synchron- oder Asynchronmotor ausgebildet sein kann.

Das Zylindergehäuse 46" jeder der Zylindereinheiten 44" wird durch eine Ventilplatte 56" abgeschlossen, auf welcher ein Zylinderkopf 58" angeordnet ist.

Vorzugsweise überdeckt dabei die Ventilplatte 56" nicht nur ein Zylindergehäuse 46" einer Zylinderbank 42", sondern sämtliche Zylindergehäuse 46" der jeweiligen Zylinderbank 42" und in gleicher Weise übergreift der Zylinderkopf 58" ebenfalls sämtliche Zylindergehäuse 46" der jeweiligen Zylinderbank 42".

Das Verdichtergehäuse 40" umfasst ferner noch einen mit dem Niederdruckanschluss 36" in Verbindung stehenden Einlasskanal 62", welcher beispielsweise in dem Verdichtergehäuse 40" integriert ist.

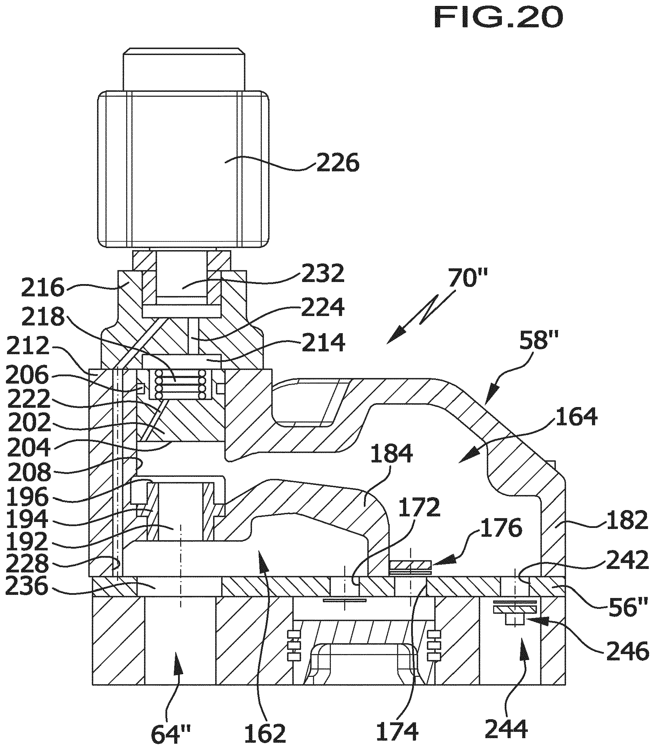

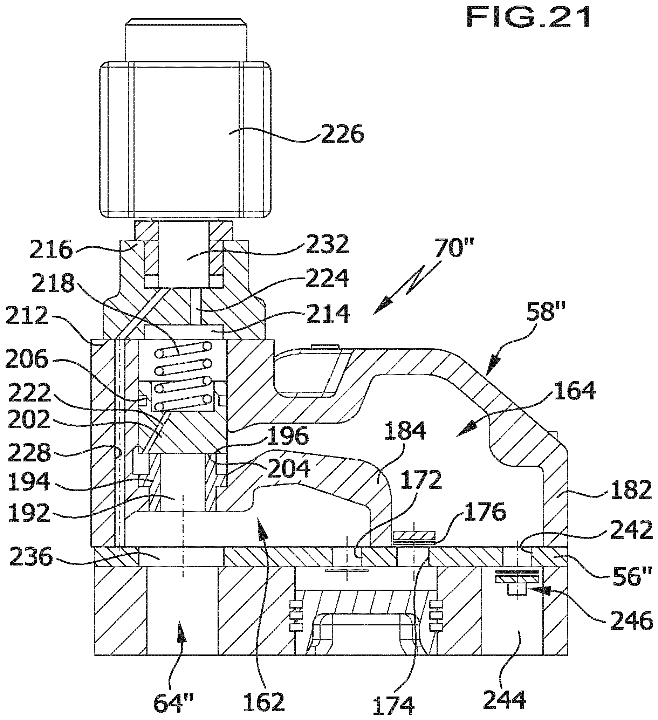

In jedem der Zylinderköpfe 42"a und 42"b ist, wie in den Fig. 20 und 21 dargestellt, jeweils eine Einlasskammer 162 und eine Auslasskammer 164 angeordnet, die den beiden Zylindereinheiten 44" der jeweiligen Zylinderbank 42" zugeordnet sind.

Insbesondere liegt die Einlasskammer 162 über Einlassöffnungen 172 der Zylindereinheiten 44" der Zylinderbank 42".

Ferner liegt die Auslasskammer 164 über in der Ventilplatte 56" angeordneten Auslassöffnungen 174 der Zylindereinheiten 44", die mit auf der Ventilplatte 56" sitzenden Auslassventilen 176 versehen sind, und grenzt insbesondere unmittelbar an diese an.

Wie in Fig. 20 und 21 dargestellt, umfasst jeder Zylinderkopf 42" einen Außenkörper 182, welcher die jeweilige Ventilplatte 56" übergreift und die Einlasskammer 162 und die Auslasskammer 164 umschließt, die ihrerseits wiederum durch einen innerhalb des Außenkörpers 182 verlaufenden Trennkörper 184 voneinander getrennt sind, wobei der Trennkörper 184 sich ausgehend von der jeweiligen Ventilplatte 56" erhebt und sich über die Einlasskammer 162 und diese übergreifend erstreckt.

Somit liegt die Auslasskammer 164 im Bereich der Ventilplatte 56" seitlich neben der Einlasskammer 162 und erstreckt sich jedoch zwischen dem Außenkörper 182 und dem Trennkörper 184 zumindest bereichsweise über der Einlasskammer 162.

Zur Betriebszustandssteuerung des Gesamtmassenstromdurchsatzes des Kältemittelverdichterverbunds ist jedem Zylinderkopf 58" die durch die Betriebszustandssteuerung 130 aktiv angesteuerte mechanische Leistungssteuereinheit 70" zugeordnet, mit welcher ein Verbindungskanal 192 zwischen der Auslasskammer 164 und der Einlasskammer 162 verschlossen oder geöffnet werden kann, wobei die dem Zylinderkopf 58" zugeordneten Zylindereinheiten 44" bei verschlossenem Verbindungskanal 192 (Fig. 21) mit voller Leistung Kältemittel verdichten und bei geöffnetem Verbindungskanal 192 kein Kältemittel verdichten, da das Kältemittel von der Auslasskammer 164 in die Einlasskammer 162 zurückströmt.

Der Verbindungskanal 192 verläuft dabei durch ein in den Trennkörper 184 eingesetztes Einsatzteil 194, welches einen Dichtungssitz 196 bildet, der der Auslasskammer 164 zugewandt liegt und welches an einen den Dichtungssitz 196 umgebenden und an diesen anschließenden Teil der Auslasskammer 164 angrenzt.

Ferner ist der Dichtungssitz 196 einem Verschlusskolben 202 zugewandt, welcher beispielsweise mit einem metallisch ausgebildeten Dichtungsbereich 204 auf den Dichtungssitz 196 aufsetzbar ist, um den Verbindungskanal 192 dicht abschließend zu verschließen und welcher so weit von dem Dichtungssitz 196 abhebbar ist, dass der Dichtungsbereich 204 im Abstand von dem Dichtungssitz 196 steht und somit Kältemittel von der Auslasskammer 164 in die Einlasskammer 162 überströmen kann.

Vorzugsweise ist dabei der Verschlusskolben 202 koaxial zu dem Einsatzteil 194 mit dem Dichtungssitz 196 und mittels eines Kolbenrings 206 abgedichtet in einer Führungsbohrung 208 geführt, die durch einen an den Außenkörper 182 angeformten Führungshülsenkörper 212 des Zylinderkopfes 58" gebildet ist.

Vorzugsweise ist der Verschlusskolben 202 selbst oder zumindest der Dichtungsbereich 204 aus einem Metall, beispielsweise aus einem Buntmetall, hergestellt, das eine geringere Härte als das Metall des Dichtungssitzes 196 aufweist, der beispielsweise aus Stahl, insbesondere gehärtetem Stahl, hergestellt ist.

Um eine schnelle Bewegung des Verschlusskolbens 202 zu ermöglichen, liegt insbesondere ein Hub des Verschlusskolbens 202 zwischen einer Verschlussstellung und einer Offenstellung im Bereich zwischen einem Viertel und der Hälfte eines mittleren Durchmessers des Verbindungskanals 192.

Der Verschlusskolben 202 begrenzt dabei eine Druckkammer 214, die auf einer dem Dichtungsbereich 204 abgewandten Seite des Verschlusskolbens 202 angeordnet ist und auf einer dem Verschlusskolben 202 gegenüberliegenden Seite durch einen Abschlusskörper 216 verschlossen ist.

Das Volumen der Druckkammer 216 ist insbesondere so gering, dass es in der Offenstellung des Verschlusskolbens kleiner ist als ein Drittel, besser kleiner als ein Viertel, noch besser kleiner als ein Fünftel, vorteilhaft kleiner als ein Sechstel und noch vorteilhafter kleiner als ein Achtel des maximalen Volumens der Druckkammer 216 in der Verschlussstellung des Verschlusskolbens 202.

Ferner ist in der Druckkammer 216 noch eine Druckfeder 218 angeordnet, welche sich einerseits am Abschlusskörper 216 abstützt und andererseits den Verschlusskolben 202 in Richtung seiner auf dem Dichtungssitz 196 aufsitzenden Verschlussstellung beaufschlagt.

Je nach Druckbeaufschlagung der Druckkammer 216 ist der Verschlusskolben 202 in seine in Fig. 20 dargestellte Offenstellung oder in seine in Fig. 21 dargestellte Verschlussstellung bewegbar.

Hierzu ist der Verschlusskolben 202 von einem Drosselkanal 222 durchsetzt, der sich von der Druckkammer 214 durch den Verschlusskolben 202 bis zu einer Mündungsöffnung erstreckt, die radial außerhalb des Dichtungsbereichs auf einer dem Dichtungssitz 196 zugewandten Seite angeordnet ist, jedoch dadurch, dass diese radial außerhalb des Dichtungsbereichs 204 liegt, in der Verschlussstellung des Verschlusskolbens 202 einen Eintritt von unter Druck in der Auslasskammer 164 stehendem und den Dichtungssitz 196 umströmenden Kältemittel erlaubt und dieses gedrosselt der Druckkammer 214 zuführt.

Darüber hinaus führt in die Druckkammer 214, und zwar beispielsweise durch den Abschlusskörper 216 ein Entlastungskanal 224, der durch ein als Ganzes mit 226 bezeichnetes Magnetventil mit einem Druckentlastungskanal 228 verbindbar ist, welcher mit der Einlasskammer 162 in Verbindung steht.

Beispielsweise ist das Magnetventil 226 so ausgebildet, dass dieses einen Ventilkörper 232 aufweist, mit welchem die Verbindung zwischen dem Druckentlastungskanal 228 und dem Entlastungskanal 224 unterbrochen oder hergestellt werden kann.

Ist die Verbindung zwischen dem Entlastungskanal 224 und dem Druckentlastungskanal 228 hergestellt, so überwiegt in der Druckkammer 214 der Saugdruck, während der Verschlusskolben 202 auf seiner der Auslasskammer 164 zugewandten Seite von dem Druck in der Auslasskammer 164 beaufschlagt ist und somit in seine Offenstellung bewegt wird.

Ist jedoch die Verbindung zwischen dem Druckentlastungskanal 228 und dem Entlastungskanal 224 durch den Ventilkörper 232 unterbrochen, so drückt die Druckfeder 218 den Verschlusskolben 202 auf den Dichtungssitz 196 und zusätzlich strömt durch den Drosselkanal 222 Hochdruck in die Druckkammer 214, so dass sich in der Druckkammer 214 Hochdruck aufbaut, der zusätzlich zur Wirkung der Druckfeder 218 den Verschlusskolben 202 mit dem Dichtungselement 204 auf den Dichtungssitz 196 drückt.

Insbesondere ist der Verschlusskolben 202 so ausgebildet, dass dieser sich radial über den Dichtungssitz 196 hinaus erstreckt, so dass selbst bei in Verschlussstellung stehendem Verschlusskolben 202 die radial außerhalb des Dichtungssitzes 196 liegende und durch Hochdruck beaufschlagte Kolbenfläche dazu führt, dass der Verschlusskolben 202 entgegen der Kraft der Druckfeder 218 in die Offenstellung, dargestellt in Fig. 20 bewegt wird, sofern der Ventilkörper 232 des Magnetventils 226 die Verbindung zwischen dem Entlastungskanal 224 und dem Druckentlastungskanal 228 herstellt was dazu führt, dass sich in der Druckkammer 214 ein Saugdruck einstellt.

Die Zufuhr von unter Saugdruck stehendem Kältemittel erfolgt über einen in den Verdichtergehäuse 40" eingeformten Zufuhrkanal 64", welcher zu einer zur Ventilplatte 56" führenden Einlassöffnung führt, durch welche unter Saugdruck stehendes Kältemittel zu einer Durchtrittsöffnung 236 in der Ventilplatte 56" strömt und durch diese in die Einlasskammer 162 übertritt.

Außerdem führt, wie in Fig. 20 und 21 dargestellt die Auslasskammer 164 zu einer in der Ventilplatte 56" angeordneten Auslassöffnung 242 durch welche das unter Druck in der Auslasskammer 164 stehende Kältemittel in einen in dem Verdichtergehäuse vorgesehenen Auslasskanal 244 übertritt und zu dem Hochdruckanschluss 16" strömen kann.

Insbesondere ist der Auslassöffnung 242 der Ventilplatte 56" ein Rückschlagventil 246 zugeordnet, welches an der Ventilplatte 56" gehalten ist und dafür sorgt, dass im Fall der Offenstellung des Verschlusskolbens 202 und somit im Fall eines Überströmens des Kältemittels aus der Auslasskammer 164 in die Einlasskammer 162 der Druck in dem Auslasskanal 244 nicht abfällt, sondern durch das sich schließende Rückschlagventil 246 aufrecht erhalten wird.

Das vierte Ausführungsbeispiel des Kältemittelverdichterverbunds 12" ist in gleicher Weise betreibbar wie das erste oder zweite oder dritte Ausführungsbeispiel, so dass hinsichtlich des Betriebs desselben mit der Zylinderauswahl Z und Drehzahlauswahl D auf die Ausführungen zu den voranstehenden Ausführungsbeispielen vollinhaltlich Bezug genommen werden kann.

Bei allen Ausführungsbeispielen eines erfindungsgemäßen Verdichterverbunds können zusätzlich zu den zwei Kolbenverdichtern 30, 32 noch weitere Kolbenverdichter vorgesehen sein, die durch die Betriebszustandssteuerung vorzugsweise ohne Zylinderauswahl Z und ohne Drehzahlauswahl D zusätzlich eingesetzt werden können.

## Patentansprüche

1. Kältemittelverdichterverbund (12) für eine Kälteanlage (10), umfassend mindestens zwei parallel zwischen einem gemeinsamen Niederdruckanschluss (24) und einem gemeinsamen Hochdruckanschluss (14) arbeitende, einzeln betreibbare sowie jeweils einen Elektromotor (60) und von diesem angetriebene Zylindereinheiten (44) aufweisende Kolbenverdichter (30, 32),
**dadurch gekennzeichnet , dass** bei dem Kältemittelverdichterverbund (12) ein im Bereich von einem Minimalmassenstromdurchsatz bis zu einem Maximalmassenstromdurchsatz variabler Gesamtmassenstromdurchsatz des Kältemittelverdichterverbunds (12), dadurch einstellbar ist, dass bei mindestens einem der Kolbenverdichter (30) dessen Massenstromdurchsatz durch Drehzahlauswahl (D) mittels eines Frequenzumrichters (62) für den Elektromotor (60) einstellbar ist und dass bei mindestens einem der Kolbenverdichter (30, 32) dessen Massenstromdurchsatz durch Zylinderauswahl (Z) einstellbar ist und dass eine Betriebszustandssteuerung (130) für den Kältemittelverdichterverbund (12) vorgesehen ist, welche basierend auf einem dieser übermittelten Leistungsanforderungssignal (LA) der Kälteanlage (10) durch Vorgabe der Zylinderauswahl (Z) und der Drehzahlauswal (D) den Gesamtmassenstromdurchsatz steuert oder regelt.

2. Kältemittelverdichterverbund nach Anspruch 1, **dadurch gekennzeichnet, dass** die Betriebszustandssteuerung (130) zum Erreichen mindestens eines Gesamtmassenstromdurchsatzes des Kältemittelverdichterverbunds (12) bei mindestens einem Kolbenverdichter (30, 32) mindestens eine zeitlich konstante Zylinderauswahl (Z) vorgibt, und/oder dass die Betriebszustandssteuerung (130) zum Erreichen des jeweiligen Gesamtmassenstromdurchsatzes des Kältemittelverdichterverbunds (12) mindestens eine zeitlich modulierte Zylinderauswahl (Z') vorgibt, und/oder dass die Betriebszustandssteuerung (130) zum Erreichen des jeweiligen Gesamtmassenstromdurchsatzes des Kältemittelverdichterverbunds (12) eine Drehzahlauswahl (D) vorgibt.

3. Kältemittelverdichterverbund nach einem der voranstehenden Ansprüche, **dadurch gekennzeichnet, dass** die Betriebszustandssteuerung (130) zum Erreichen des jeweiligen Gesamtmassenstromdurchsatzes einen ersten der Kolbenverdichter (30) mit Drehzahlauswahl (D) und einen zweiten der Kolbenverdichter (32) mit Zylinderauswahl (Z) betreibt und/oder dass insbesondere die Betriebszustandssteuerung (130) zum Erreichen des jeweiligen Gesamtmassenstromdurchsatzes den zweiten der Kolbenverdichter mit zeitlich modulierter und/oder zeitlich unmodulierter Zylinderauswahl (Z, Z') betreibt.

4. Kältemittelverdichterverbund nach einem der voranstehenden Ansprüche, **dadurch gekennzeichnet, dass** die Betriebszustandssteuerung (130) zum Erreichen des jeweiligen Gesamtmassenstromdurchsatzes einen ersten der Kolbenverdichter (30) mit Drehzahlauswahl (D) und Zylinderauswahl (Z) und einen zweiten der Kolbenverdichter (32) mit Zylinderauswahl (Z) betreibt, und/oder dass insbesondere die Betriebszustandssteuerung (130) zum Erreichen des jeweiligen Gesamtmassenstromdurchsatzes den ersten Kolbenverdichter (30) und den zweiten Kolbenverdichter (32) mit zeitlich unmodulierter Zylinderauswahl (Z) und einen der Kolbenverdichter (30, 32) auch mit zeitlich modulierter Zylinderauswahl (Z') betreibt.

5. Kältemittelverdichterverbund nach einem der voranstehenden Ansprüche, **dadurch gekennzeichnet, dass** der Betrieb von mindestens einem der Kolbenverdichter (30, 32) mit Drehzahlauswahl (D) sowohl den Betrieb bei Drehzahl Null als auch den Betrieb in einem für den erforderlichen Massenstromdurchsatz geeigneten Drehzahlbereich (D) umfasst.

6. Kältemittelverdichterverbund nach einem der voranstehenden Ansprüche, **dadurch gekennzeichnet, dass** der Betrieb von mindestens einem der Kolbenverdichter (30, 32) durch Zylinderauswahl (Z) einen Betrieb mit allen Zylindereinheiten (44), oder einer Teilmenge von allen Zylindereinheiten (44) oder einen Betrieb bei abgeschalteten Zylindereinheiten (44) oder abgeschaltetem Elektromotor umfasst.

7. Kältemittelverdichterverbund nach einem der voranstehenden Ansprüche, **dadurch gekennzeichnet, dass** die Betriebszustandssteuerung (130) bei einem Gesamtmassenstromdurchsatz nahe dem Minimalmassenstromdurchsatz nur einen der Kolbenverdichter (30, 32) betreibt, und/oder dass insbesondere die Betriebszustandssteuerung (130) bei dem niedrigsten möglichen Gesamtmassenstromdurchsatz nur den mit zeitlich modulierter Zylinderauswahl (Z') betreibbaren Kältemittelverdichter (30, 32) betreibt, und/oder dass insbesondere die Betriebszustandssteuerung (130) bei einem Gesamtmassenstromdurchsatz nahe dem niedrigsten möglichen Gesamtmassenstromdurchsatz nur den mit Drehzahlauswahl (D) betreibbaren Kältemittelverdichter (30) betreibt, und/oder dass insbesondere die Betriebszustandssteuerung (130) bei dem niedrigsten Gesamtmassenstromdurchsatz nur den Kolbenverdichter (30) mit Drehzahlauswahl (D) und Zylinderauswahl (Z) betreibt.

8. Kältemittelverdichterverbund nach einem der voranstehenden Ansprüche, **dadurch gekennzeichnet, dass** die Betriebszustandssteuerung (130) die Drehzahlauswahl (D) und die Zylinderauswahl (Z, Z') im Hinblick auf den höchsten Gütegrad oder den höchsten COP oder die niedrigste elektrische Leistungsaufnahme des Kältemittelverdichterverbunds (12) bei den jeweiligen Gesamtmassenstromdurchsatz optimiert.

9. Kältemittelverdichterverbund nach einem der voranstehenden Ansprüche, **dadurch gekennzeichnet, dass** die Betriebszustandssteuerung (130) bei mehreren durch Drehzahlauswahl (D) und Zylinderauswahl (Z) möglichen Betriebsmodi zum Erreichen des jeweiligen Gesamtmassenstromdurchsatzes den Gütegrad oder den COP oder die elektrische Leistungsaufnahme zu den möglichen Betriebsmodi ermittelt und den Betriebsmodus mit dem höchsten Gütegrad oder COP oder der niedrigsten elektrischen Leistungsaufnahme auswählt.

10. Kältemittelverdichterverbund nach einem der voranstehenden Ansprüche, **dadurch gekennzeichnet, dass** die Betriebszustandssteuerung (130) für die Ermittlung des Gütegrads oder des COP oder der elektrischen Leistungsaufnahme für die jeweilige Drehzahlauswahl (D) und/oder Zylinderauswahl (Z) erforderliche Daten abgespeichert hat.

11. Kältemittelverdichterverbund nach einem der Ansprüche 8 bis 10, **dadurch gekennzeichnet, dass** die Ermittlung des Gütegrades oder COP oder der elektrischen Leistungsaufnahme durch die Betriebszustandssteuerung (130) durch Erfassung des Niederdrucks (PS) und/oder des Hochdrucks (PH) des Kältemittelverdichterverbunds (12) erfolgt und/oder dass insbesondere die Betriebszustandssteuerung (130) zur Ermittlung des Gütegrads oder des COP oder der elektrischen Leistungsaufnahme das Kältemittel, den Gesamtmassenstromdurchsatz, die elektrische Leistungsaufnahme und/oder die Drehzahl der Elektromotoren (60) heranzieht.

12. Kältemittelverdichterverbund nach einem der voranstehenden Ansprüche, **dadurch gekennzeichnet, dass** zur Optimierung des Gütegrades oder COP oder der elektrischen Leistungsaufnahme der möglichen Betriebsmodi, umfassend Drehzahlauswahl (D) und Zylinderauswahl (Z), sämtliche durch den Kältemittelverdichterverbund (12) realisierbaren Gesamtmassenstromdurchsätze unterschiedlichen Gesamtmassenstromdurchsatzbereichen zugeordnet werden und dass jedem Gesamtmassenstromdurchsatzbereich bestimmte Betriebsmodi zugeordnet werden.

13. Kältemittelverdichterverbund nach einem der voranstehenden Ansprüche, **dadurch gekennzeichnet, dass** die Aktivierung und Deaktivierung jeder Zylinderbank (42) mittels einer von der Betriebszustandssteuerung (130) gesteuerten mechanischen Leistungssteuereinheit (70) erfolgt, und/oder dass insbesondere die mechanische Leistungssteuereinheit (70) einem Zylinderkopf (58) der Zylinderbank (42) zugeordnet ist und/oder dass insbesondere die mechanische Leistungssteuereinheit (70) zum Aktivieren oder Deaktivieren der jeweiligen Zylinderbank (42) einen Einlassstrom (74) in die Einlasskammer (72) des Zylinderkopfes (58) steuert.

14. Kältemittelverdichterverbund nach einem der voranstehenden Ansprüche, **dadurch gekennzeichnet, dass** die Leistungssteuereinheit (70) zum Aktivieren oder Deaktivieren der jeweiligen Zylinderbank (42') in dem Zylinderkopf (58) die Auslasskammer (164) mit der Einlasskammer (162) verbindet.

15. Kältemittelverdichterverbund nach einem der voranstehenden Ansprüche, **dadurch gekennzeichnet, dass** die Betriebszustandssteuerung (130) eine vom Frequenzumrichter (132) separate Betriebszustandssteuerung (130) ist.

16. Kältemittelverdichterverbund nach einem der voranstehenden Ansprüche, **dadurch gekennzeichnet, dass** die Betriebszustandssteuerung (130) in einem den Frequenzumrichter (132) aufnehmendem Gehäuse (40) angeordnet ist.

17. Kältemittelverdichterverbund nach einem der voranstehenden Ansprüche, **dadurch gekennzeichnet, dass** die Zylinderbänke (42) der Kolbenverdichter (30, 32) im Parallelbetrieb arbeiten und/oder dass insbesondere die Kolbenverdichter (30, 32) pro Zylinderbank (42) mindestens zwei Zylindereinheiten (44) aufweisen und/oder dass insbesondere die Kolbenverdichter (30, 32) mehr als zwei Zylinderbänke (42) aufweisen.

18. Kälteanlage umfassend einen Kältemittelverdichterverbund (12), einen hochdruckseitigen Wärmeübertrager (18), ein Expansionsorgan (30) und einen niederdruckseitigen Wärmeübertrager (32), **dadurch gekennzeichnet, dass** der Kältemittelverdichterverbund (12) nach einem der voranstehenden Ansprüche ausgebildet ist, dass insbesondere die Kälteanlage (10) eine Anlagensteuerung (138) aufweist, welche das Leistungsanforderungssignal (LA) für die Betriebszustandssteuerung erzeugt, dass insbesondere die Betriebszustandssteuerung (130) in einem Gehäuse der Anlagensteuerung (138) angeordnet ist.

## Claims

1. A refrigerant compressor group (12) for a refrigeration system (10), comprising at least two piston compressors (30, 32) that operate in parallel between a common low-pressure connector (24) and a common high-pressure connector (14), are operable individually and each have an electric motor (60) and cylinder units (44) that are driven by this,
**characterised in that**, in the refrigerant compressor group (12), an overall mass flow throughput in the refrigerant compressor group (12) that is variable within the range from a minimum mass flow throughput to a maximum mass flow throughput is adjustable **in that**, in the case of at least one of the piston compressors (30), its mass flow throughput is adjustable by speed selection (D) with the aid of a frequency converter (62) for the electric motor (60), and **in that**, in the case of at least one of the piston compressors (30, 32), its mass flow throughput is adjustable by cylinder selection (Z), and **in that** an operating condition controller (130) for the refrigerant compressor group (12) is provided which, on the basis of a performance request signal (LA) of the refrigeration system (10) that is transmitted to the operating condition controller (130), controls the overall mass flow throughput by open or closed-loop control by predetermining the cylinder selection (Z) and the speed selection (D).

2. A refrigerant compressor group according to Claim 1, **characterised in that**, for the purpose of achieving at least one overall mass flow throughput in the refrigerant compressor group (12), in at least one piston compressor (30, 32) the operating condition controller (130) predetermines at least one cylinder selection (Z) that is constant over time, and/or **in that**, for the purpose of achieving the respective overall mass flow throughput in the refrigerant compressor group (12), the operating condition controller (130) predetermines at least one time-modulated cylinder selection (Z'), and/or **in that**, for the purpose of achieving the respective overall mass flow throughput in the refrigerant compressor group (12), the operating condition controller (130) predetermines a speed selection (D).

3. A refrigerant compressor group according to one of the preceding claims, **characterised in that**, for the purpose of achieving the respective overall mass flow throughput, the operating condition controller (130) operates a first one of the piston compressors (30) with speed selection (D) and a second one of the piston compressors (32) with cylinder selection (Z) and/or **in that** in particular, for the purpose of achieving the respective overall mass flow throughput, the operating condition controller (130) operates the second of the piston compressors with cylinder selection (Z, Z') that is time-modulated and/or not time-modulated.

4. A refrigerant compressor group according to one of the preceding claims, **characterised in that**, for the purpose of achieving the respective overall mass flow throughput, the operating condition controller (130) operates a first one of the piston compressors (30) with speed selection (D) and cylinder selection (Z), and a second one of the piston compressors (32) with cylinder selection (Z), and/or **in that** in particular, for the purpose of achieving the respective overall mass flow throughput, the operating condition controller (130) operates the first piston compressor (30) and the second piston compressor (32) with cylinder selection (Z) that is not time-modulated, and also operates one of the piston compressors (30, 32) with cylinder selection (Z') that is time-modulated.

5. A refrigerant compressor group according to one of the preceding claims, **characterised in that** operation of at least one of the piston compressors (30, 32) with speed selection (D) comprises both operation at a speed of zero and also operation in a speed range (D) that is suitable for the required mass flow throughput.

6. A refrigerant compressor group according to one of the preceding claims, **characterised in that** operation of at least one of the piston compressors (30, 32) by cylinder selection (Z) comprises operation with all the cylinder units (44), or some of these cylinder units (44), or operation with the cylinder units (44) switched off or the electric motor switched off.

7. A refrigerant compressor group according to one of the preceding claims, **characterised in that**, with an overall mass flow throughput close to the minimum mass flow throughput, the operating condition controller (130) operates only one of the piston compressors (30, 32), and/or **in that** in particular, with the lowest possible overall mass flow throughput, the operating condition controller (130) operates only the refrigerant compressor (30, 32) that is operable with time-modulated cylinder selection (Z'), and/or **in that** in particular, with an overall mass flow throughput close to the lowest possible overall mass flow throughput, the operating condition controller (130) operates only the refrigerant compressor (30) that is operable with speed selection (D), and/or **in that** in particular, with the lowest overall mass flow throughput, the operating condition controller (130) operates only the piston compressor (30) with speed selection (D) and cylinder selection (Z).

8. A refrigerant compressor group according to one of the preceding claims, **characterised in that**, with the respective overall mass flow throughput, the operating condition controller (130) optimises the speed selection (D) and the cylinder selection (Z, Z') in respect of the highest quality grade or the highest COP value or the lowest electrical power consumption of the refrigerant compressor group (12).

9. A refrigerant compressor group according to one of the preceding claims, **characterised in that**, where there are a plurality of possible operating modes as a result of speed selection (D) and cylinder selection (Z), for the purpose of achieving the respective overall mass flow throughput, the operating condition controller (130) determines the quality grade or COP value or electrical power consumption for the possible operating modes and selects the operating mode with the highest quality grade or COP value or the lowest electrical power consumption.

10. A refrigerant compressor group according to one of the preceding claims, **characterised in that** the operating condition controller (130) has stored data that is required for determining the quality grade or COP value or electrical power consumption for the respective speed selection (D) and/or cylinder selection (Z).

11. A refrigerant compressor group according to one of Claims 8 to 10, **characterised in that** the quality grade or COP value or electrical power consumption is determined by the operating condition controller (130) by detecting the low pressure (PS) and/or high pressure (PH) of the refrigerant compressor group (12) and/or **in that** in particular, for the purpose of determining the quality grade or COP value or electrical power consumption, the operating condition controller (130) makes use of the refrigerant, the overall mass flow throughput, the electrical power consumption and/or the speed of the electric motors (60).

12. A refrigerant compressor group according to one of the preceding claims, **characterised in that**, for the purpose of optimising the quality grade or COP value or electrical power consumption of the possible operating modes comprising speed selection (D) and cylinder selection (Z), all the overall mass flow throughputs that are achievable by the refrigerant compressor group (12) are associated with different overall mass flow throughput ranges, and **in that** certain operating modes are associated with each overall mass flow throughput range.

13. A refrigerant compressor group according to one of the preceding claims, **characterised in that** activation and deactivation of each cylinder bank (42) is performed with the aid of a mechanical performance control unit (70) that is controlled by the operating condition controller (130), and/or **in that** in particular the mechanical performance control unit (70) is associated with a cylinder head (58) of the cylinder bank (42) and/or **in that** in particular the mechanical performance control unit (70) controls an inlet stream (74) into the inlet chamber (72) of the cylinder head (58) for the purpose of activating or deactivating the respective cylinder bank (42).

14. A refrigerant compressor group according to one of the preceding claims, **characterised in that** the performance control unit (70) connects the outlet chamber (164) to the inlet chamber (162) in the cylinder head (58) for the purpose of activating or deactivating the respective cylinder bank (42').

15. A refrigerant compressor group according to one of the preceding claims, **characterised in that** the operating condition controller (130) is an operating condition controller (130) that is separate from the frequency converter (132).

16. A refrigerant compressor group according to one of the preceding claims, **characterised in that** the operating condition controller (130) is arranged in a housing (40) that receives the frequency converter (132).

17. A refrigerant compressor group according to one of the preceding claims, **characterised in that** the cylinder banks (42) of the piston compressors (30, 32) work in a parallel operation and/or **in that** in particular the piston compressors (30, 32) have at least two cylinder units (44) per cylinder bank (42) and/or **in that** in particular the piston compressors (30, 32) have more than two cylinder banks (42).

18. A refrigeration system, comprising a refrigerant compressor group (12), a heat exchanger (18) on the high-pressure side, an expansion member (30), and a heat exchanger (32) on the low-pressure side, **characterised in that** the refrigerant compressor group (12) takes a form according to one of the preceding claims, **in that** in particular the refrigeration system (10) has a system controller (138) that generates the performance request signal (LA) for the operating condition controller, **in that** in particular the operating condition controller (130) is arranged in a housing of the system controller (138).

## Revendications

1. Ensemble compresseur de fluide frigorigène (12) pour une installation frigorifique (10), comprenant au moins deux compresseurs à piston (30, 32) travaillant parallèlement entre un raccord basse pression (24) commun et un raccord haute pression (14) commun, pouvant fonctionner individuellement ainsi que présentant respectivement un moteur électrique (60) et des unités de cylindre (44) entraînées par celui-ci, **caractérisé en ce que** pour l'ensemble compresseur de fluide frigorigène (12), un débit de courant massique entier variable dans la plage d'un débit de courant massique minimal à un débit de courant massique maximal de l'ensemble compresseur de fluide frigorigène (12) est réglable du fait que pour au moins un des compresseurs à piston (30), son débit de courant massique est réglable par la sélection de la vitesse de rotation (D) au moyen d'un convertisseur de fréquence (62) pour le moteur électrique (60) et que pour au moins un des compresseurs à piston (30, 32), son débit de courant massique est réglable par la sélection du cylindre (Z) et **en ce qu'**une commande d'état de fonctionnement (130) est prévue pour l'ensemble compresseur de fluide frigorigène (12) qui commande ou régule le débit de courant massique entier sur la base d'un signal d'exigence de puissance (LA) transmis à celle-ci de l'installation frigorifique (10) par prédéfinition de la section du cylindre (Z) et de la sélection de la vitesse de rotation (D).

2. Ensemble compresseur de fluide frigorigène selon la revendication 1, **caractérisé en ce que** la commande d'état de fonctionnement (130) prédéfinit pour l'atteinte d'au moins un débit de courant massique entier de l'ensemble compresseur de fluide frigorigène (12) pour au moins un compresseur à piston (30, 32) au moins une sélection du cylindre (Z) constante temporellement, et/ou **en ce que** la commande d'état de fonctionnement (130) prédéfinit pour l'atteinte du débit de courant massique entier respectif de l'ensemble compresseur de fluide frigorigène (12) au moins une sélection du cylindre (Z') modulée temporellement, et/ou **en ce que** la commande d'état de fonctionnement (130) prédéfinit pour l'atteinte du débit de courant massique entier respectif de l'ensemble compresseur de fluide frigorigène (12) une sélection de la vitesse de rotation (D).

3. Ensemble compresseur de fluide frigorigène selon l'une quelconque des revendications précédentes, **caractérisé en ce que** la commande d'état de fonctionnement (130) fait fonctionner pour l'atteinte du débit de courant massique entier respectif un premier des compresseurs à piston (30) avec la sélection de la vitesse de rotation (D) et un second des compresseurs à piston (32) avec la sélection de cylindre (Z) et/ou **en ce qu'**en particulier la commande d'état de fonctionnement (130) fait fonctionner pour l'atteinte du débit de courant massique entier respectif le second des compresseurs à piston avec la sélection de cylindre (Z, Z') modulée temporellement et/ou non modulée temporellement.

4. Ensemble compresseur de fluide frigorigène selon l'une quelconque des revendications précédentes, **caractérisé en ce que** la commande d'état de fonctionnement (130) fait fonctionner pour l'atteinte du débit de courant massique entier respectif un premier des compresseurs à piston (30) avec une sélection de la vitesse de rotation (D) et une sélection du cylindre (Z) et un second des compresseurs à piston (32) avec une sélection de cylindre (Z), et/ou en ce qu'en particulier la commande d'état de fonctionnement (130) fait fonctionner pour l'atteinte du débit de courant massique entier respectif le premier compresseur à piston (30) et le second compresseur à piston (32) avec une sélection du cylindre (Z) non modulée temporellement et un des compresseurs à piston (30, 32) aussi avec une sélection du cylindre (Z') modulée temporellement.

5. Ensemble compresseur de fluide frigorigène selon l'une quelconque des revendications précédentes, **caractérisé en ce que** le fonctionnement d'au moins un des compresseurs à piston (30, 32) avec la sélection de la vitesse de rotation (D) comprend non seulement le fonctionnement à une vitesse de rotation de zéro mais aussi le fonctionnement dans une plage de vitesse de rotation (D) appropriée au débit de courant massique nécessaire.

6. Ensemble compresseur de fluide frigorigène selon l'une quelconque des revendications précédentes, **caractérisé en ce que** le fonctionnement d'au moins un des compresseurs à piston (30, 32) par sélection du cylindre (Z) comprend un fonctionnement avec toutes les unités de cylindre (44), ou une quantité partielle de toutes les unités de cylindre (44) ou un fonctionnement en cas d'unités de cylindre (44) hors service ou moteur électrique hors service.

7. Ensemble compresseur de fluide frigorigène selon l'une quelconque des revendications précédentes, **caractérisé en ce que** la commande d'état de fonctionnement (130) fait fonctionner en cas de débit de courant massique entier près du débit de courant massique minimal seulement un des compresseurs à piston (30, 32), et/ou **en ce qu'**en particulier la commande d'état de fonctionnement (130) fait fonctionner en cas de débit de courant massique entier possible le plus bas seulement le compresseur de fluide frigorigène (30, 32) pouvant fonctionner avec une sélection du cylindre (Z') modulé temporellement, et/ou en ce qu'en particulier la commande d'état de fonctionnement (130) fait fonctionner en cas de débit de courant massique entier près du débit de courant massique entier possible le plus bas seulement le compresseur de fluide frigorigène (30) pouvant fonctionner avec une sélection de la vitesse de rotation (D) et/ou **en ce qu'**en particulier la commande d'état de fonctionnement (130) fait fonctionner pour le débit de courant massique entier le plus bas seulement le compresseur à piston (30) avec une sélection de la vitesse de rotation (D) et une sélection de cylindre (Z).

8. Ensemble compresseur de fluide frigorigène selon l'une quelconque des revendications précédentes, **caractérisé en ce que** la commande d'état de fonctionnement (130) optimise la sélection de la vitesse de rotation (D) et la sélection du cylindre (Z, Z') en ce qui concerne le rendement le plus élevé ou le COP le plus élevé ou la puissance absorbée électrique la plus basse de l'ensemble compresseur de fluide frigorigène (12) pour le débit de courant massique entier respectif.

9. Ensemble compresseur de fluide frigorigène selon l'une quelconque des revendications précédentes, **caractérisé en ce que** la commande d'état de fonctionnement (130) détermine pour plusieurs modes de fonctionnement possibles par la sélection de la vitesse de rotation (D) et la sélection du cylindre (Z) pour l'atteinte du débit de courant massique entier respectif le rendement ou le COP ou la puissance absorbée électrique pour les modes de fonctionnement possibles et sélectionne le mode de fonctionnement avec le rendement le plus élevé ou le COP ou la puissance absorbée électrique la plus basse.

10. Ensemble compresseur de fluide frigorigène selon l'une quelconque des revendications précédentes, **caractérisé en ce que** la commande d'état de fonctionnement (130) pour la détermination du rendement ou du COP ou de la puissance absorbée électrique a enregistré des données nécessaires à la sélection de la vitesse de rotation (D) respective et/ou la sélection du cylindre (Z).

11. Ensemble compresseur de fluide frigorigène selon l'une quelconque des revendications 8 à 10, **caractérisé en ce que** la détermination du rendement ou du COP ou de la puissance absorbée électrique est effectuée par la commande d'état de fonctionnement (130) par détection de la basse pression (PS) et/ou de la haute pression (PH) de l'ensemble compresseur de fluide frigorigène (12) et/ou **en ce qu'**en particulier la commande d'état de fonctionnement (130) utilise pour la détermination du rendement ou du COP ou de la puissance absorbée électrique le fluide frigorigène, le débit de courant massique entier, la puissance absorbée électrique et/ou la vitesse de rotation des moteurs électriques (60).

12. Ensemble compresseur de fluide frigorigène selon l'une quelconque des revendications précédentes, **caractérisé en ce que** pour l'optimisation du rendement ou du COP ou de la puissance absorbée électrique des modes de fonctionnement possibles, comprenant la sélection de la vitesse de rotation (D) et la sélection du cylindre (Z), tous les débits de courant massique entiers réalisables par l'ensemble compresseur de fluide frigorigène (12) sont associés aux plages de débits de courant massique entiers différentes et **en ce que** des modes de fonctionnement déterminés sont associés à chaque plage de débit de courant massique entier.

13. Ensemble compresseur de fluide frigorigène selon l'une quelconque des revendications précédentes, **caractérisé en ce que** l'activation et la désactivation de chaque rangée de cylindre (42) est effectuée au moyen d'une unité de commande de puissance (70) mécanique commandée par la commande d'état de fonctionnement (130), et/ou **en ce qu'**en particulier l'unité de commande de puissance (70) mécanique est associée à une tête de cylindre (58) de la rangée de cylindre (42) et/ou **en ce qu'**en particulier l'unité de commande de puissance (70) mécanique commande pour l'activation ou la désactivation de la rangée de cylindre (42) respectif un courant d'entrée (74) dans la chambre d'entrée (72) de la tête de cylindre (58).

14. Ensemble compresseur de fluide frigorigène selon l'une quelconque des revendications précédentes, **caractérisé en ce que** l'unité de commande de puissance (70) relie pour l'activation ou la désactivation du band de cylindre (42') respectif dans la tête de cylindre (58) la chambre de sortie (164) à la chambre d'entrée (162).

15. Ensemble compresseur de fluide frigorigène selon l'une quelconque des revendications précédentes, **caractérisé en ce que** la commande d'état de fonctionnement (130) est une commande d'état de fonctionnement (130) séparée du convertisseur de fréquence (132).

16. Ensemble compresseur de fluide frigorigène selon l'une quelconque des revendications précédentes, **caractérisé en ce que** la commande d'état de fonctionnement (130) est agencée dans un boîtier (40) recevant le convertisseur de fréquence (132).

17. Ensemble compresseur de fluide frigorigène selon l'une quelconque des revendications précédentes, **caractérisé en ce que** les rangées de cylindre (42) des compresseurs à piston (30, 32) travaillent en parallèle et/ou **en ce qu'**en particulier les compresseurs à piston (30, 32) présentent par rangée de cylindre (42) au moins deux unités de cylindre (44) et/ou **en ce qu'**en particulier les compresseurs à piston (30, 32) présentent plus de deux rangées de cylindre (42).

18. Installation frigorifique comprenant un ensemble compresseur de fluide frigorigène (12), un échangeur de chaleur (18) côté haute pression, un organe de détente (30) et un échangeur de chaleur (32) côté basse pression, **caractérisé en ce que** l'ensemble compresseur de fluide frigorigène (12) est réalisé selon l'une quelconque des revendications précédentes, **en ce qu'**en particulier l'installation frigorifique (10) présente une commande d'installation (138) qui génère le signal d'exigence de puissance (LA) pour la commande d'état de fonctionnement, **en ce qu'**en particulier la commande d'état de fonctionnement (130) est agencée dans un boîtier de la commande d'installation (138).
